**Europäisches Patentamt**

**European Patent Office**

**Office européen des brevets**

(19)

(11) **EP 1 168 192 A2**

(12) **EUROPEAN PATENT APPLICATION**

(43) Date of publication:
**02.01.2002 Bulletin 2002/01**

(51) Int Cl.$^7$: **G06F 17/14**

(21) Application number: **01114884.8**

(22) Date of filing: **29.06.2001**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **30.06.2000 JP 2000198374**
**06.07.2000 JP 2000204916**
**02.08.2000 JP 2000234130**

(71) Applicant: **Viktor Company of Japan Ltd.**
**Yokohama-shi, Kanagawa-ken (JP)**

(72) Inventors:
- **Takaoka, Katsumi**
  **Yokosuka-shi, Kanagawa-ken (JP)**
- **Kaneko, Keiichi**
  **Atsugi-shi, Kanagawa-ken (JP)**

(74) Representative: **HOFFMANN - EITLE**
**Patent- und Rechtsanwälte Arabellastrasse 4**
**81925 München (DE)**

(54) **Recursive discrete fourier transformation**

(57)     The invention is directed to an oxidizing composition of agglutinated particles comprising an alkali metal permanganate, a binder/coating agent of an alkali metal silicate and/or alkali metal aluminate and a filler such as clay, diatomaceous earth, talc, ground silica or zeolites. The invention also is directed to an oxidizing kit which includes a pervious container and the oxidizing composition. The invention also is directed to a method of oxidizing waste materials with the kit in a substantially aqueous moving fluid stream.

FIG.1

**Description**

BACKGROUND OF THE INVENTION

1. Field of the Invention

The present invention relates to an arithmetic operation method for Fourier transformation or inverse Fourier transformation and more particularly to an arithmetic operation method for carrying out those transformations with a simple arithmetic operation processing for obtaining a result of the arithmetic operation by those transformations in a short time.

2. Description of the Related Art

Conventionally, the Fourier transformation method used in frequency analysis and the like of time-series data stream has been employed in high compression encoding of audio signal and moving picture signal as well as spectrum analysis of signals in audio signal processing field, moving picture data processing field for medical system and the like. Further, inverse Fourier transformation method and Fourier transformation method, which operate in complementary way to each other, have been widely used as modulation technology and demodulation technology in communication field.

According to the Fourier transformation method, data stream sampled as digital amount is treated as N groups (N is an integer, for example, 1024) and a time interval, in which the N-data stream exist, is assumed as a window period while that window period is assumed to be basic frequency. Then, signal components of data stream existing in the window period are obtained as real number component and imaginary number component of a harmonic signal of the basic frequency.

The inverse Fourier transformation method is a transformation method, which is complementary to the Fourier transformation method.

Then, data stream supplied to be subjected to the Fourier transformation is discrete data stream sampled at every predetermined period and a method for conducting the Fourier transformation on the discrete data is called discrete Fourier transformation (DFT). The discrete Fourier transformation technology is employed as an analysis technology for control technology, in which, for example, a state of production process is obtained with discrete data, the quality of the process is kept optimum by analyzing the obtained data and the rate of acceptable products in manufactured products is improved. The inverse Fourier transformation method for discrete data is called inverse discrete Fourier transformation (IDFT), which is employed for modulation of digital ground broadcasting, scheduled to be started from 2003 as well as generation of sound source in audio field, while its application field has been widening every year.

The discrete Fourier transformation technology and the inverse discrete Fourier transformation technology, which are employed in the above manner, are signal conversion technologies, which operate in complementary manner. In the discrete Fourier transformation of the former, supplied signals are sampled at every predetermined time interval and a voltage value obtained by the sampling is obtained as sampled data. When the data stream, which is a group of the obtained data, is N data obtained in a predetermined time t , x(t), x(t+1), x(t+2),..., x(t+N-2), x(t+N-1), avalue x (k, t) of the discrete Fourier transformation obtained with respect to the N data is defined in a following equation.

$$X(k,t) = \frac{1}{\sqrt{N}} \sum_{n=t}^{t+N-1} x(n) \exp\left[-j2(n-t)\frac{\pi k}{N}\right]$$

$$= \frac{1}{\sqrt{N}} \sum_{n=t}^{t+N-1} \left\{ x_r(n) \cos\left[2(n-t)\frac{\pi k}{N}\right] + x_i(n) \sin\left[2(n-t)\frac{\pi k}{N}\right] \right\}$$

$$+ j\frac{1}{\sqrt{N}} \sum_{n=t}^{t+N-1} \left\{ -x_r(n) \sin\left[2(n-t)\frac{\pi k}{N}\right] + x_i(n) \cos\left[2(n-t)\frac{\pi k}{N}\right] \right\} \cdots (1)$$

for k = 0,1, ..., N-1

As evident from this equation, the Fourier transformation is carried out on supplied data stream just such that its inherent basic function is convoluted in every point to be obtained and an operation for convoluting the basic function is conducted by a plurality of multiplication processings.

When the multiplication processing is carried out with a special multiplying circuit or a digital signal processor (DSP), it has been known that a load upon hardware used for arithmetic operation in the multiplying circuit or the DSP is increased tremendously.

As for the load on this multiplication processing, a transformation equation expressed with the aforementioned equation (1) needs multiplications of $4 \times N^2$ times, so that in case where N is 1024, for example, the multiplication frequency is about 4,200,000 times. Therefore, the load of the arithmetic operation is very large and further, if the number N of points to be handled as the data stream is increased, the multiplication processing frequency is increased by second power, which is unfavorable in terms of actual field.

Thus, as the discrete Fourier transformation equation, fast Fourier transformation (FFT), whose operation efficiency is raised by deforming the matrix by paying attention to the regularity that the basic function is composed of a cyclic function, is employed actually.

An arithmetic operation method called butterfly operation is employed for the FFT. The butterfly operation is so constructed that a simple integer, for example, 2 is defined as a basic number and supplied binary complex data is subjected to complex operation comprised of a single addition, subtraction and multiplication each so as to output binary complex data.

Therefore, the N-point FFT is comprised of $\log_2 N$-step stage and $(N/2)\log_2 N$ butterfly operations and an operation result of the FFT can be obtained depending on the number of multiplications of $(2N)\log_2 N$ times. Consequently, the N-point FFT is used as a Fourier transformation method ensuring a high operating efficiency.

The FFT or discrete Fourier transformation (DFT) conducted in the above manner is usually used, so that data stream, sampled successively at a predetermined time interval and then supplied, is subjected to Fourier transformation. In that Fourier transformation, the sampled data stream is stored in a memory circuit in succession temporarily and when the number of data stored in the memory circuit temporarily reaches N, the Fourier transformation processing for that N data is started.

During the Fourier transformation processing, data stored in the memory circuit temporarily is kept as it is and when the arithmetic operation is terminated, new data is supplied to the memory circuit again so that it is stored therein. Then, after the predetermined amount N of data is stored, the Fourier transformation processing is started again.

However, because data is supplied without any interruption when the Fourier operation is executed also, a second memory circuit for accumulating N-data stream may be provided as another memory. Each time when N data are supplied, these memory circuits execute temporary storage processing and arithmetic operation processing alternately, so that the Fourier transformation is carried out on continuously supplied time-series data.

In the Fourier transformation executed in such a manner, the arithmetic operation is carried out on N-data stream stored temporarily such that the data stream is treated as a block unit. Therefore, in such Fourier transformation processing, a delay of time corresponding to N-data stream is generated, so that a transformation result cannot be obtained at real time.

Thus, although the data stream is supplied successively, the result of the Fourier analysis can be obtained only at N-samplings time interval. The delay time is not preferable for application of the Fourier analysis, thereby restricting its application field.

In order to secure a result of the Fourier transformation each time when sampled data is supplied, by executing the Fourier transformation processing on N-point data containing new data supplied successively to be sampled, to solve the above-described problem, N-point Fourier transformation processings need to be carried out within a sampling period. Even in case where FFT operation method developed for such fast arithmetic operation processing is employed, N-time operating speed is demanded to secure a Fourier operation result computed continuously from the FFT. In a normal case, it is difficult to conduct such super high speed FFT to supply an obtained operation result.

Although in the Fourier transformation, generally, the FFT operation processing method is used, the FFT operation processing is carried out on N-point data stream, which is sampled with a clock signal whose sampling frequency is fs, quantitized and supplied, usually at a frequency interval of fs/N.

In the arithmetic operation, data is fetched into other buffer memory even during the Fourier transformation processing, so that the Fourier analytic processing is carried out on time-series data supplied during the operation also. In a period in which data stored in one buffer memory temporarily is being processed, data supplied to the other memory is fetched thereinto. When fetching of N data is terminated, those arithmetic operation and data fetching processing are switched so as to execute the Fourier operation processing. However, this method needs two sets of the buffer memories and FFT operation processing means, which is not a favorable method in economic viewpoint.

Further, because this method carries out block processing in which supplied N time-series data are treated as a block, the result of the Fourier transformation on the N-point data fetched in is not outputted until N sampling clock time passes, and the analysis result obtained at that time is only a result of the Fourier transformation processing for every N samples.

The result of the Fourier transformation on the newest N-point data containing data, which is sampled successively and supplied, cannot be outputted at real time. If it is intended to output the transformation result at real time, the Fourier transformation processing in each sampling period is needed. However, if the Fourier transformation is carried out continuously at every sampling time interval, the amount of arithmetic operation per unit time becomes tremendous, which is not a realistic method.

On the other hand, as a method for obtaining a result of continuous Fourier transformation processing, "Fourier transformation device and Fourier transformation method" has been proposed in Japanese Patent Application Laid-Open No. H1-59454.

This publication describes a method for Fourier-transforming a vibration waveform value sampled and supplied. According to the same method, a difference between a newly supplied vibration waveform value and an old vibration waveform value already supplied and used for Fourier transformation processing is obtained and a newer complex vibration value than the old complex vibration value provided by the arithmetic operation is obtained each time when a sampling value of the vibration waveform is supplied.

Although frequency analysis may be considered as an application using the continuous Fourier transformation, if such application is considered, often any frequency band is analyzed at any resolution and then, that application is executed depending on the result.

However, the aforementioned publication does not consider those points.

Input data stream described in the same publication refers to only real number. Although if the data stream to be sampled is data stream which can be expressed in time series, it is permitted that the data stream is limited to the real number, imaginary number input signal as well as real number input signal may be sometimes used in Fourier operation for use in communication field, and therefore, supplied complex signals have to be subjected to transformation processing.

However, the conventional fast Fourier transformation method, in which continuously supplied data is subjected to Fourier transformation to secure an operation result, is not capable of carrying out complex Fourier transformation on data stream supplied in the form of complex number.


SUMMARY OF THE INVENTION

Accordingly, an object of the present invention is to provide a continuous Fourier transformation method suitable for transforming any frequency band desired to be subjected to Fourier analysis at a desired resolution.

Another object of the present invention is to provide a continuous Fourier transformation method enabling Fourier analysis on data stream supplied in the form of complex number and suitable for transforming any frequency band desired to be subjected to Fourier analysis at a desired resolution.

To achieve the above object, there is provided a recursive discrete Fourier transformation method wherein data values $x(t)$, $x(t+1)$, $x(t+2)$, $x(t+3)$, ..., $x(t+N-1)$, $x(t+N)$ sampled at times $t$, $t+1$, $t+2$, $t+3$, ..., $t+N-1$, $t+N$ (N is a positive integer which is 1 or more) each having an equal interval are supplied and with such N data values supplied since time $t$ as a data stream, a frequency component, which is degree $k$ ($k$ is 0 or a positive integer smaller than N) obtained by carrying out complex Fourier transformation on the data stream, is obtained such that a real part $Xr(k, t)$ thereof and an imaginary part $X_i(k, t)$ thereof are complex Fourier coefficients, the method comprising: a first step of storing the data stream $x(t)$, $x(t+1)$, $x(t+2)$, $x(t+3)$, ..., $x(t+N-1)$ supplied since time $t$ at time $t+N-1$ into a first memory means temporarily; a second step of obtaining the complex Fourier coefficients $X_r(k, t)$ and $X_i(k, t)$ of the data stream stored temporarily at the first step; a third step of storing the complex Fourier coefficients $X_r(k, t)$ and $X_i(k, t)$ obtained at the second step into the second memory means temporarily; and a fourth step of by using data value $x(t+N)$ supplied at time $t+N$, data value $x(t)$ stored in the first memory means temporarily and the complex Fourier coefficients $X_r(k, t)$, $X_i(k,t)$ stored in the second memory means temporarily, obtaining complex Fourier coefficients $X_r(k, t+1)$ and $X_i(k, t+1)$ to the data stream supplied since time $t+1$ with respect to a positive constant value A for giving an amplitude value corresponding to a difference between the $x(t+N)$ and the $x(t)$ according to a following equation:

$$X_r(k,t+1) = \left\{ X_r(k,t) + \frac{1}{A}\left[x(t+N) - x(t)\right] \right\} \times \cos\left[2\frac{\pi k}{N}\right] + X_i(k,t)\sin\left[2\frac{\pi k}{N}\right]$$

$$X_i(k,t+1) = X_i(k,t)\cos\left[2\frac{\pi k}{N}\right] - \left\{X_r(k,t) + \frac{1}{A}[x(t+N) - x(t)]\right\}\sin\left[2\frac{\pi k}{N}\right]$$

According to the present invention, data stream comprised of supplied N samples is subjected to complex Fourier transformation and then, the oldest sample value used for complex Fourier transformation is subtracted from the value of a new sample to be supplied next so as to obtain a subtraction value. By deleting the oldest sample at the same time, discrete Fourier operation result on new N samples can be obtained based on that subtraction value and the result of the preceding complex Fourier operation. Thus, different from the conventional Fourier operation that is carried out after N sample data is supplied, a Fourier operation result can be obtained quickly in a single sample period.

Further, to achieve the above object, there is provided a recursive discrete Fourier transformation method wherein with sampling frequency as fs, data values x(t), x(t+1), x(t+2), x(t+3), ..., x(t+N-1), x(t+N) sampled at times t, t+1, t+2, t+3, ..., t+N-1, t+N (N is a positive integer which is 1 or more) each having an equal interval are supplied and with such N data values supplied since time t as a data stream, a frequency interval given with a minimum frequency f1 and a maximum frequency f2 to the data stream is regarded as a measuring frequency interval, a frequency interval obtained by dividing that measuring frequency interval by the N is assumed to be an analysis frequency interval and a result of the frequency analysis obtained by carrying out complex Fourier transformation at every analysis frequency interval is obtained as a frequency component which is k (k is 0 or a positive integer smaller than N) times the frequency interval, such that a real part $X_r(k, t)$ thereof and an imaginary part $X_i(k, t)$ thereof are complex Fourier coefficients, the method comprising: a first step of storing the data stream x(t), x(t+1), x(t+2), x(t+3), ..., x(t+N-1) supplied since time t at time t+N-1 into a first memory means temporarily; a second step of obtaining the complex Fourier coefficients $X_r(k, t)$ and $X_i(k, t)$ of the data stream stored temporarily at the first step; a third step of storing the complex Fourier coefficients $X_r(k, t)$ and $X_i(k, t)$ obtained at the second step into the second memory means temporarily; and a fourth step of by using data value x(t+N) supplied at time t+N, data value x(t) stored in the first memory means temporarily and the complex Fourier coefficients $X_r(k, t)$, $X_i(k,t)$ stored in the second memory means temporarily, obtaining complex Fourier coefficients $X_r(k, t+1)$ and $X_i(k, t+1)$ within the frequency interval with the minimum frequency f1 and the maximum frequency f2 to the data stream supplied since time t+1 with respect to a positive constant A for giving an amplitude corresponding to a difference between the x(t+N) and the x(t) according to following equations:

$$X_r(k,t+1) = \left\{X_r(k,t) + \frac{1}{A}[x(t+N) - x(t)]\right\} \times \cos\left\{2\frac{\pi}{fs}\left[\frac{(f2-f1)k}{N-1} + f1\right]\right\}$$

$$+ X_i(k,t)\sin\left\{2\frac{\pi}{fs}\left[\frac{(f2-f1)k}{N-1} + f1\right]\right\}$$

$$X_i(k,t+1) = X_i(k,t) \times \cos\left\{2\frac{\pi}{fs}\left[\frac{(f2-f1)k}{N-1} + f1\right]\right\} - \left\{X_r(k,t) + \frac{1}{A}[x(t+N) - x(t)]\right\}$$

$$\times \sin\left\{2\frac{\pi}{fs}\left[\frac{(f2-f1)k}{N-1} + f1\right]\right\}$$

According to the present invention, data stream comprised of supplied N samples is subjected to complex Fourier transformation and then, the oldest sample value used for complex Fourier transformation is subtracted from the value of a new sample to be supplied next so as to obtain a subtraction value. By deleting the oldest sample at the same time, discrete Fourier operation result on new N samples can be obtained based on that subtraction value and the result of the preceding complex Fourier operation. At this time, a frequency band for analysis for the discrete Fourier operation is set up with f1 and f2 preliminarily and the Fourier operation is carried out with a basic frequency whose resolution is set to N. Thus , different from a conventional case in which the frequency band and resolution are automatically set up when the Fourier operation is carried out after the N sample data is supplied, a result of the Fourier operation within any frequency band at any resolution can be obtained quickly in a single sampling period.

According to a preferred embodiment of the present invention, inverse discrete Fourier transformation data subjected to inverse discrete Fourier transformation using a positive constant a is supplied so as to obtain a complex Fourier transformation coefficient to the supplied inverse discrete Fourier transformation data, the discrete Fourier transformation being carried out using the positive constant A corresponding to the positive constant a.

According to this embodiment, in addition to the above described effect, the operation can be carried out by FFT in which the positive constant A is set up by selecting appropriately 1, N or a square root of N. This is employed in, for example, communication apparatus. In case where information signal to be transmitted is subjected to inverse fast Fourier transformation (IFFT) processing to be converted to time-series signal and that time-series signal is transmitted, in Fourier operation method for obtaining information signal by supplying that transmitted signal to the FFT for executing the FFT operation, the constant value A corresponding to the constant value **a**, which is, for example, 1, N or the square root of N used for the IFFT operation, is employed in the FFT operation processing circuit, so as to construct the FFT which operates in a complementary way with the IFFT to decode the information signal. By using the constant value A corresponding to the value **a** used for the IFFT operation for a signal supplied from other mating system, system having an excellent characteristic can be established.

According to a preferred embodiment of the present invention, **k** indicating a degree of the complex Fourier coefficient is set to a desired value and Fourier transformation to the set value **k** is repeated at every time having an equal interval.

According to this embodiment, in addition to the above described effect, particularly by setting up the value of **k** to a specific value, a result of the Fourier analysis on a specific frequency determined with the value **k** can be computed quickly. Thus, if there is a system controlled according to the result of the Fourier transformation on that specific frequency, the control of that system can be carried out at a minimum delay time, so that response characteristic of the entire system can be improved. Thus, system having a better quality can be constructed.

Further, to achieve the above object, there is provided a recursive discrete Fourier transformation method wherein data values x(t), x(t+1), x(t+2), x(t+3),..., x(t+N-1), x(t+N) sampled at times t, t+1, t+2, t+3, ..., t+N-1, t+N (N is a positive integer which is 1 or more) each having an equal interval are supplied and with such N data values supplied since time t as a data stream, a frequency component, which is degree k (k is 0 or a positive integer smaller than N) obtained by carrying out complex Fourier transformation on the data stream, is obtained such that a real part $X_r(k, t)$ thereof and an imaginary part $X_i(k, t)$ thereof are complex Fourier coefficients, the method comprising: a first step of storing the data stream x(t), x(t+1), x(t+2), x(t+3) , ..., x(t+N-1) supplied since time t at time t+N-1 into a first memory means temporarily; a second step of obtaining the complex Fourier coefficients $X_r(k, t)$ and $X_i(k, t)$ of the data stream stored temporarily at the first step; a third step of storing the complex Fourier coefficients $X_r(k, t)$ and $X_i(k, t)$ obtained at the second step into the second memory means temporarily; and a fourth step of by using the complex Fourier coefficients $X_r(k, t) - jX_i(k, t)$ stored in the second memory means temporarily, obtaining complex Fourier coefficients $X_r(k, t+1) - jX_i(k, t+1)$ to the data stream supplied since time t+1 based on a transfer function expressed in a following equation.

$$H(z) = A\left(1 - z^{-N}\right)\left\{\frac{\cos\left[2\frac{\pi k}{N}\right] - j\sin\left[2\frac{\pi k}{N}\right] - z^{-1}}{1 - 2\cos\left[2\frac{\pi k}{N}\right]z^{-1} + z^{-2}}\right\}$$

where A is a positive constant for providing [x(t+N) - x(t)] with an amplitude.

According to the present invention, data stream comprised of supplied N samples is subjected to complex Fourier transformation and then, the oldest sample value used for complex Fourier transformation is subtracted from the value of a new sample to be supplied next so as to obtain a subtraction value. By deleting the oldest sample at the same time, discrete Fourier coefficients to new N samples can be obtained by operation with a predetermined transfer function based on that subtraction value and the preceding complex Fourier operation result. Thus, different from the conventional Fourier operation that is carried out after N sample data is supplied, a Fourier operation result can be obtained quickly in a single sample period.

Further, to achieve the above object, there is provided a recursive discrete Fourier transformation method wherein with sampling frequency as fs, data values x(t), x(t+1), x(t+2), x(t+3), ..., x(t+N-1), x(t+N) sampled at times t, t+1, t+2, t+3, ..., t+N-1, t+N (N is a positive integer which is 1 or more) each having an equal interval are supplied and with such N data values supplied since time t as a data stream, a frequency interval given with a minimum frequency f1 and a maximum frequency f2 to that data stream is regarded as a measuring frequency interval, a frequency interval obtained by dividing that measuring frequency interval by the N is assumed to be an analysis frequency interval and a result of the frequency analysis provided by carrying out complex Fourier transformation at every analysis frequency interval is obtained as a frequency component which is k (k is 0 or a positive integer smaller than N) times the frequency interval, such that a real part $X_r(k, t)$ thereof and an imaginary part $X_i(k, t)$ thereof are complex Fourier coefficients, the method comprising: a first step of storing the data stream x(t), x(t+1), x(t+2), x(t+3), ..., x(t+N-1) supplied since time t at time t+N-1 into a first memory means temporarily; a second step of obtaining the complex Fourier coefficients $X_r(k, t)$ and $X_i(k, t)$ of the data stream stored temporarily at the first step; a third step of storing the complex Fourier coefficients $X_r(k, t)$ and $X_i(k, t)$ obtained at the second step into the second memory means temporarily; and a fourth step of by using the complex Fourier coefficient $X_r(k, t) - jX_i(k, t)$ stored in the second memory means temporarily, obtaining complex Fourier coefficients $X_r(k, t+1) - jX_i(k, t+1)$ at the frequency interval given by the minimum frequency f1 and the maximum frequency f2 to the data stream supplied since time t+1 based on a transfer function expressed in a following equation:

$$H(z) = A(1 - z^{-N})\left\{\frac{\cos[2\pi p] - j\sin[2\pi p] - z^{-1}}{1 - 2\cos[2\pi p]z^{-1} + z^{-2}}\right\}$$

where A is a positive constant for providing [x(t+N) - x(t)] with an amplitude value, and

$$p = \frac{1}{fs}\left\{\frac{(f2 - f1)k}{N - 1} + f1\right\}, \quad 0 \le k \le N - 1$$

According to the present invention, data stream comprised of supplied N samples is subjected to complex Fourier transformation and then, the oldest sample value used for complex Fourier transformation is subtracted from the value of a new sample to be supplied next so as to obtain a subtraction value. By deleting the oldest sample at the same time, discrete Fourier operation result on new N samples can be obtained based on that subtraction value and the result of preceding the complex Fourier operation. At this time, a frequency band for analysis for the discrete Fourier operation is set up with f1 and f2 preliminarily and that Fourier operation is carried out with a basic frequency whose resolution is set to N. Thus, different from a conventional case in which the frequency band and resolution are automatically set up when the Fourier operation is carried out after the N sample data is supplied, a result of the Fourier operation within any frequency band at any resolution can be obtained quickly in a single sampling period.

According to a preferred embodiment of the present invention, the positive constant value A for providing with an amplitude corresponding to a difference between the x(t+N) and the x(t) is capable of being set selectively with an inverse number of square root of 1, N or 1/N.

According to this embodiment, in addition to the above described effect, the operation can be carried out by FFT in which the positive constant A is set up by selecting appropriately 1, 1/N or an inverse number of a square root of N. This is employed in, for example, communication apparatus. In case where information signal to be transmitted is subjected to inverse fast Fourier transformation (IFFT) processing to be converted to time-series signal and that time-series signal is transmitted, in Fourier operation method for obtaining information signal by supplying that transmitted signal to the FFT for executing the FFT operation, the constant value A corresponding to the constant value **a**, which is, for example, 1, 1/N or the inverse number of the square root of N used for the IFFT operation, is employed in the FFT operation processing circuit, so as to construct the FFT which operates in a complementary way with the IFFT to decode the information signal. By using the constant value A corresponding to the value **a** used for the IFFT operation for a signal supplied from other mating system, system having an excellent characteristic can be established.

According to a preferred embodiment of the present invention, **k** indicating the degree of the complex Fourier coefficient is set to a desired value and the Fourier transformation to the set value **k** is repeated at every time having an equal interval.

According to this embodiment, in addition to the above described effect, particularly by setting up the value of **k** to a specific value, a result of the Fourier analysis on a specific frequency determined with the value **k** can be computed in a short time. Thus, if there is a system controlled according to the result of the Fourier transformation on that specific frequency, the control of that system can be carried out at a minimum delay time, so that response characteristic of the entire system can be improved. Thus, system having a better quality can be constructed.

Further, to achieve the above object, there is provided a recursive discrete Fourier transformation method for obtaining complex Fourier coefficients, wherein data values $x_r(t)+jx_i(t)$, $x_r(t+1) + jx_i(t+1)$, $x_r(t+2) + jx_i(t+2)$, $x_r(t+3) + jx_i(t+3)$, ..., $x_r(t+N-1) + jx_i(t+N-1)$, $x_r(t+N) + jx_i(t+N)$ sampled at times t, t+1, t+2, t+3, ..., t+N-1, t+N (N is a positive integer which is 1 or more) each having an equal interval are supplied and with such N data values supplied since time t as a data stream, a frequency component, which is degree k (k is 0 or a positive integer smaller than N) obtained by carrying out complex Fourier transformation on the data stream, is obtained such that a real part $X_r(k, t)$ thereof and an imaginary part $X_i(k, t)$ thereof are complex Fourier coefficients, the method comprising: a first step of storing the data stream $x_r(t)+jx_i(t)$, $x_r(t+1) + jx_i(t+1)$, $x_r(t+2) + jx_i(t+2)$, $x_r(t+3) + jx_i(t+3)$, ..., $x_r(t+N-1) + jx_i(t+N-1)$ supplied since time t at time t+N-1 into a first memory means temporarily; a second step of obtaining the complex Fourier coefficients $X_r(k, t)$ and $X_i(k, t)$ of the data stream stored temporarily at the first step; a third step of storing the complex Fourier coefficients $X_r(k, t)$ and $X_i(k, t)$ obtained at the second step into the second memory means temporarily; and a fourth step of by using the data value $x_r(t+N) + jx_i(t+N)$ supplied at time t+N, the data value $x_r(t) + jx_i(t)$ stored in the first memory means temporarily and the complex Fourier coefficient $X_r(k, t)$ and $X_i(k, t)$ stored in the second memory means temporarily and used recursively, obtaining complex Fourier coefficients $X_r(k, t+1)$ and $X_i(k, t+1)$ to the data stream supplied since time t+1 with respect to a positive constant A for giving an amplitude value corresponding to the difference between the $x_r(t+N)$ and the $x_r(t)$ according to a following equation:

$$X_r(k,t) = \left\{ X_r(k,t) + \frac{1}{A}\left[x_r(t + N) - x_r(t)\right] \right\} \cos\left[2\frac{\pi k}{N}\right]$$

$$- \left\{ X_i(k,t) + \frac{1}{A}\left[x_i(t + N) - x_i(t)\right] \right\} \sin\left[2\frac{\pi k}{N}\right]$$

$$X_i(k,t+1) = \left\{ X_i(k,t) + \frac{1}{A}\left[x_i(t + N) - x_i(t)\right] \right\} \cos\left[2\frac{\pi k}{N}\right]$$

$$+ \left\{ X_r(k,t) + \frac{1}{A}\left[x_r(t + N) - x_r(t)\right] \right\} \sin\left[2\frac{\pi k}{N}\right]$$

According to the present invention, data stream comprised of supplied N complex data is subjected to Fourier transformation, so that a Fourier operation result to new N complex data can be obtained based on the preceding Fourier transformation result, data value of new complex data to be supplied next and the oldest complex data used for executing the Fourier transformation. Therefore, different from the conventional case where the Fourier operation is carried out after the N sample data is supplied, the Fourier operation result can be obtained quickly in the period of a single complex data.

Further, to achieve the above object, there is provided a recursive discrete Fourier transformation method for obtaining complex Fourier coefficient wherein with sampling frequency as fs, data values $x_r(t)+jx_i(t)$, $x_r(t+1) + jx_i(t+1)$, $x_r(t+2) + jx_i(t+2)$, $x_r(t+3) + jx_i(t+3)$, ..., $x_r(t+N-1) + jx_i(t+N-1)$, $x_r(t+N) + jx_i(t+N)$ sampled at times t, t+1, t+2, t+3, ..., t+N-1, t+N (N is a positive integer which is 1 or more) each having an equal interval are supplied and with such N complex data values supplied since time t as a data stream, a frequency interval given with a minimum frequency f1 and a maximum frequency f2 to that data stream is regarded as a specified frequency interval, a frequency interval obtained by dividing the specified frequency interval by the N is assumed to be a minimum frequency interval and a result of the Fourier transformation provided by carrying out complex Fourier transformation at every minimum frequency interval is obtained as a frequency component which is k (k is 0 or a positive integer smaller than N) times the minimum frequency interval, such that a real part $X_r(k, t)$ thereof and an imaginary part $X_i(k, t)$ thereof are complex Fourier coefficients, the method comprising: a first step of storing the data stream $x_r(t) + jx_i(t)$, $x_r(t+1) + jx_i(t+1)$, $x_r(t+2) + jx_i(t+2)$, $x_r(t+3) + jx_i(t+3)$, ..., $x_r(t+N-1) + jx_i(t+N-1)$, $x_r(t+N) + jx_i(t+N)$ supplied since time t at time t+N-1 into a first memory means temporarily; a second step of obtaining the complex Fourier coefficients $X_r(k, t)$ and $X_i(k, t)$ of the data stream stored temporarily at the first step; a third step of storing the complex Fourier coefficients $X_r(k, t)$ and $X_i(k, t)$ obtained at the second step into the second memory means temporarily; and a fourth step of by using the data value $x_r(t+N) +$

jx$_i$(t+N) supplied at time t+N, the data value x$_r$(t) + jx$_i$(t) stored temporarily in the first memory means and complex Fourier coefficients X$_r$(k, t) and X$_i$(k, t) stored temporarily in the second memory means and used recursively, obtaining complex Fourier coefficient X$_r$(k, t+1) and X$_i$(k, t+1) in the specified frequency interval given by the minimum frequency f1 and the maximum frequency f2 to the data stream supplied since time t+1 with respect to a positive constant A for giving an amplitude value corresponding to a difference between the x(t+N) and the x(t) according to a following equation:

$$X_r(k, t+1) = \left\{ X_r(k, t) + \frac{1}{A}[x_r(t+N) - x_r(t)] \right\} \times \cos\left\{ 2\frac{\pi}{fs}\left[ \frac{(f2-f1)k}{N-1} + f1 \right] \right\}$$

$$- \left\{ X_i(k, t) + \frac{1}{A}[x_i(t+N) - x_i(t)] \right\} \times \sin\left\{ 2\frac{\pi}{fs}\left[ \frac{(f2-f1)k}{N-1} + f1 \right] \right\}$$

$$X_i(k, t+1) = \left\{ X_i(k, t) + \frac{1}{A}[x_i(t+N) - x_i(t)] \right\} \times \cos\left\{ 2\frac{\pi}{fs}\left[ \frac{(f2-f1)k}{N-1} + f1 \right] \right\}$$

$$+ \left\{ X_r(k, t) + \frac{1}{A}[x_r(t+N) - x_r(t)] \right\} \times \sin\left\{ 2\frac{\pi}{fs}\left[ \frac{(f2-f1)k}{N-1} + f1 \right] \right\}$$

According to the present invention, data stream comprised of supplied N complex data is subjected to Fourier transformation and then, when it is intended to obtain a result of the Fourier operation to new N complex data on the basis of the result of the preceding Fourier transformation, data value of new complex data to be supplied next and the oldest complex data used for Fourier, the frequency band to be Fourier-transformed is set up with f1 and f2 preliminarily and further, the Fourier operation is carried out using the basic frequency set with the resolution N. Therefore, different from the conventional case where the frequency band and the resolution are automatically determined when the N sample data are supplied for the Fourier operation, a Fourier operation result to any frequency band and resolution can be obtained quickly and easily in the period of a single sample.

According to a preferred embodiment of the present invention, by using data value y$_r$(t) + jy$_i$(t) supplied at time t, data value y$_r$(t+N) + jy$_i$(t+N) supplied at time t+N and complex inverse discrete Fourier coefficients Y$_r$(k, t) and Yi(k, t) with the real part and the imaginary part obtained with respect to N data values y$_r$(t) + jy$_i$(t), y$_r$(t+1) + jy$_i$(t+1), ..., y$_r$(t+N-1) + jy$_i$(t+N-1) supplied from time t to time t+N-1, a real part Y$_r$(k, t+1) and an imaginary part Y$_i$(k, t+1) of each complex inverse discrete Fourier coefficient of N data values supplied since time t+1 are obtained with respect to a positive constant value B for giving an amplitude corresponding to a difference between the y$_r$(t+N) and the y$_r$(t) as inverse discrete Fourier transformation data according to following equations,

$$Y_r(k, t+1) = \left\{ Y_r(k, t) + \frac{1}{B}[y_r(t+N) - y_r(t)] \right\} \cos\left[ 2\frac{\pi k}{N} \right]$$

$$+ \left\{ Y_i(k, t) + \frac{1}{B}[y_i(t+N) - y_i(t)] \right\} \sin\left[ 2\frac{\pi k}{N} \right]$$

$$Y_i(k,t+1) = \left\{ Y_i(k,t) + \frac{1}{B}\left[ y_i(t+N) - y_i(t) \right] \right\} \cos\left[ 2\frac{\pi k}{N} \right]$$

$$- \left\{ Y_r(k,t) + \frac{1}{B}\left[ y_r(t+N) - y_r(t) \right] \right\} \sin\left[ 2\frac{\pi k}{N} \right]$$

and after the obtained inverse discrete Fourier transformation data is supplied, discrete Fourier transformation on the supplied inverse discrete Fourier transformation data is carried out, the recursive discrete Fourier transformation conducting discrete Fourier transformation by using the positive constant value A corresponding to the positive constant value B.

According to this embodiment, in addition to the above described effect, the Fourier transformation can be carried out such that the positive constant A is set up to 1, N or a square root of N. This is employed in, for example, communication apparatus. In case where information signal to be transmitted is subjected to inverse fast Fourier transformation (IFFT) processing to be converted to time-series signal and that time-series signal is transmitted, in the Fourier operation method for obtaining information signal by supplying that transmitted signal to the FFT for executing the FFT operation, the constant value A corresponding to the constant value B, which is, for example, 1, N or the square root of N used for the IFFT operation, is employed in the FFT operation processing circuit, so as to construct the FFT which operates in a complementary way with the IFFT. By using the constant value A corresponding to the value B used for the IFFT operation for a signal supplied from other mating system, system containing Fourier transformation processing having an excellent characteristic can be established.

According to a preferred embodiment of the present invention, **k** indicating the degree of the complex Fourier coefficient is set to a desired value and the Fourier transformation to the set value **k** is repeated at every time having an equal interval.

According to this embodiment, in addition to the above described effect, particularly by setting up the value of **k** to a specific value, the Fourier analysis on a specific frequency determined with the value **k** can be carried out in a short time. Thus, if there is a system controlled according to the result of the Fourier transformation on that specific frequency, the control of that system can be carried out at a minimum delay time, so that response characteristic of the entire system can be improved. Thus, system whose response characteristic is a short time, having a better quality, can be constructed.

Further, to achieve the above object, there is provided a recursive inverse discrete Fourier transformation method for obtaining complex inverse Fourier coefficient wherein complex data values $x_r(t) + jx_i(t)$, $x_r(t+1) + jx_i(t+1)$, $x_r(t+2) + jx_i(t+2)$, $x_r(t+3) + jx_i(t+3)$, ..., $x_r(t+N-1) + jx_i(t+N-1)$, $x_r(t+N) + jx_i(t+N)$ sampled at times t, t+1, t+2, t+3, ..., t+N-1, t+N (N is a positive integer which is 1 or more) each having an equal interval are supplied and with such N data values supplied since time t as a data stream, an inverse complex Fourier transformation component, which is degree k (k is 0 or a positive integer smaller than N) obtained by carrying out inverse complex Fourier transformation on the data stream, is obtained such that a real part $X_r(k, t)$ thereof and an imaginary part $X_i(k, t)$ thereof are inverse complex Fourier coefficients, the method comprising: a first step of storing the data stream $x_r(t)+jx_i(t)$, $x_r(t+1) + jx_i(t+1)$, $x_r(t+2) + jx_i(t+2)$, $x_r(t+3) + jx_i(t+3)$, ..., $x_r(t+N-1) + jx_i(t+N-1)$ supplied since time t at time t+N-1 into a first memory means temporarily; a second step of obtaining the inverse complex Fourier coefficients $X_r(k, t)$ and $X_i(k, t)$ of the data stream stored temporarily at the first step; a third step of storing the inverse complex Fourier coefficients $X_r(k, t)$ and $X_i(k, t)$ obtained at the second step into the second memory means temporarily; and a fourth step of by using the data value $x_r(t+N) + jx_i(t+N)$ supplied at time t+N, the data value $x_r(t) + jx_i(t)$ stored in the first memory means temporarily and the inverse complex Fourier coefficient $X_r(k, t)$ and $X_i(k, t)$ stored in the second memory means temporarily, obtaining inverse complex Fourier coefficients $X_r(k, t+1)$ and $X_i(k, t+1)$ to the data stream supplied since time t+1 with respect to a positive constant B for giving an amplitude value corresponding to the difference between the $x_r(t+N)$ and the $x_r(t)$ according to a following equation:

$$X_r(k,t+1) = \left\{ X_r(k,t) + \frac{1}{B}[x_r(t+N) - x_r(t)] \right\} \cos\left[2\frac{\pi k}{N}\right]$$

$$+ \left\{ X_i(k,t) + \frac{1}{B}[x_i(t+N) - x_i(t)] \right\} \sin\left[2\frac{\pi k}{N}\right]$$

$$X_i(k,t+1) = \left\{ X_i(k,t) + \frac{1}{B}[x_i(t+N) - x_i(t)] \right\} \cos\left[2\frac{\pi k}{N}\right]$$

$$- \left\{ X_r(k,t) + \frac{1}{B}[x_r(t+N) - x_r(t)] \right\} \sin\left[2\frac{\pi k}{N}\right]$$

According to the present invention, data stream comprised of supplied N complex data is subjected to inverse Fourier transformation, so that an inverse Fourier operation result to new N complex data can be obtained based on the preceding inverse Fourier transformation result, data value of new complex data to be supplied next and the oldest complex data used for executing the inverse Fourier transformation. Therefore, different from the conventional case where the inverse Fourier operation is carried out after the N sample data is supplied, the inverse Fourier operation result can be obtained quickly in the period of a single complex data.

Further, to achieve the above object, there is provided a recursive inverse discrete Fourier transformation method for obtaining complex inverse Fourier coefficients wherein with sampling frequency as fs, data values $x_r(t) + jx_i(t)$, $x_r(t+1) + jx_i(t+1)$, $x_r(t+2) + jx_i(t+2)$, $x_r(t+3) + jx_i(t+3)$, ..., $x_r(t+N-1) + jx_i(t+N-1)$, $x_r(t+N) + jx_i(t+N)$ sampled at times t, t+1, t+2, t+3, ..., t+N-1, t+N (N is a positive integer which is 1 or more) each having an equal interval are supplied and with such N data values supplied since time t as a data stream, a frequency interval given with a minimum frequency f1 and a maximum frequency f2 to the data stream is regarded as a specified frequency interval, a frequency interval obtained by dividing that specified frequency interval by the N is assumed to be a minimum frequency interval and a result of the inverse Fourier transformation provided by carrying out inverse complex Fourier transformation at every minimum frequency interval is obtained as a frequency component which is k (k is 0 or a positive integer smaller than N) times the minimum frequency interval, in the form of a real part $X_r(k, t)$ and an imaginary part $X_i(k, t)$, the method comprising: a first step of storing the data stream $x_r(t)+jx_i(t)$, $x_r(t+1) + jx_i(t+1)$, $x_r(t+2) + jx_i(t+2)$, $x_r(t+3) + jx_i(t+3)$, ..., $x_r(t+N-1) + jx_i(t+N-1)$, $x_r(t+N) + jx_i(t+N)$ supplied since time t at time t+N-1 into a first memory means temporarily; a second step of obtaining the inverse Fourier coefficients $X_r(k, t)$ and $X_i(k, t)$ of the data stream stored temporarily at the first step; a third step of storing the inverse Fourier coefficients $X_r(k, t)$ and $X_i(k, t)$ obtained at the second step into the second memory means temporarily; and a fourth step of by using the data value $x_r(t+N) + jx_i(t+N)$ supplied at time t+N, the data value $x_r(t) + jx_i(t)$ stored temporarily in the first memory means and preceding inverse Fourier coefficients $X_r(k, t)$ and $X_i(k, t)$ stored temporarily in the second memory means, obtaining inverse Fourier coefficient $X_r(k, t+1)$ and $X_i(k, t+1)$ in the specified frequency interval given by the minimum frequency f1 and the maximum frequency f2 to the data stream supplied since time t+1 with respect to a positive constant B for giving an amplitude value corresponding to a difference between the x(t+N) and the x(t) according to following equations:

$$X_r(k,t+1) = \left\{ X_r(k,t) + \frac{1}{B}[x_r(t+N) - x_r(t)] \right\} \times \cos\left\{ 2\frac{\pi}{fs}\left[\frac{(f2-f1)k}{N-1} + f1\right] \right\}$$

$$+ \left\{ X_i(k,t) + \frac{1}{B}[x_i(t+N) - x_i(t)] \right\} \times \sin\left\{ 2\frac{\pi}{fs}\left[\frac{(f2-f1)k}{N-1} + f1\right] \right\}$$

$$X_i(k,t+1) = \left\{ X_i(k,t) + \frac{1}{B}\left[x_i(t+N) - x_i(t)\right]\right\} \times \cos\left\{2\frac{\pi}{fs}\left[\frac{(f2-f1)k}{N-1} + f1\right]\right\}$$

$$- \left\{ X_r(k,t) + \frac{1}{B}\left[x_r(t+N) - x_r(t)\right]\right\} \times \sin\left\{2\frac{\pi}{fs}\left[\frac{(f2-f1)k}{N-1} + f1\right]\right\}$$

According to the present invention, data stream comprised of supplied N complex data is subjected to inverse Fourier transformation and then, when it is intended to obtain a result of the inverse Fourier operation to new N complex data on the basis of the result of the preceding inverse Fourier transformation, data value of new complex data to be supplied next and the oldest complex data used for inverse Fourier, the frequency band to be inverse-Fourier-transformed is set up with f1 and f2 preliminarily and further, the inverse Fourier operation is carried out using the basic frequency set with the resolution N. Therefore, different from the conventional case where the frequency band and the resolution are automatically determined when the N sample data are supplied for the inverse Fourier operation, an inverse Fourier operation result to any frequency band and resolution can be obtained quickly and easily in the period of a single sample.

According to a preferred embodiment of the present invention, **k** indicating the degree of the complex Fourier coefficient is set to a desired value and the inverse Fourier transformation to the set value **k** is repeated at every time having an equal interval.

According to this embodiment, in addition to the above described effect, particularly by setting up the value of **k** to a specific value, the inverse Fourier analysis on a specific frequency determined with the value **k** can be carried out in a short time. Thus, if there is a system for generating a signal according to the result of the inverse Fourier transformation on that specific frequency, an operation of that system can be executed at a minimum delay time, so that response characteristic of the entire system can be improved. Thus, because the response characteristic of the entire system can be improved, system whose response characteristic is shorter, having an excellent quality, can be constructed.

The nature, principle and utility of the invention will become more apparent from the following detailed description when read in conjunction with the accompanying drawings.

BRIEF DESCRIPTION OF THE DRAWINGS

In the accompanying drawings:

Fig.1 is a diagram showing schematically a recursive discrete Fourier transformation device according to an embodiment of the present invention;

Fig.2 is a diagram showing schematically a relation between data value obtained by sampling the waveform of signal supplied to the recursive discrete Fourier transformation device of the embodiment of the present invention and a corresponding DFT operation;

Fig.3 is a diagram showing the structure of the recursive discrete Fourier transformation, which carries out arithmetic operation using a transfer function according to the embodiment of the present invention;

Fig.4 is a diagram showing an analysis frequency band in the recursive discrete Fourier transformation device of the embodiment of the present invention and a relation of the frequency relating to setting of resolution;

Fig. 5 is a diagram showing the structure for an analysis frequency band and the setting of the resolution in the recursive discrete Fourier transformation device which carries out arithmetic operation using a transfer function of the embodiment of the present invention; and

Fig.6 is a diagram showing a schematic structure of the recursive inverse discrete Fourier transformation device of the embodiment of the present invention.

DESCRIPTION OF THE PREFERRED EMBODIMENTS

Hereinafter, the preferred embodiment of the recursive discrete Fourier transformation method and the recursive inverse discrete Fourier transformation method of the present invention will be described with reference to the accompanying drawings.

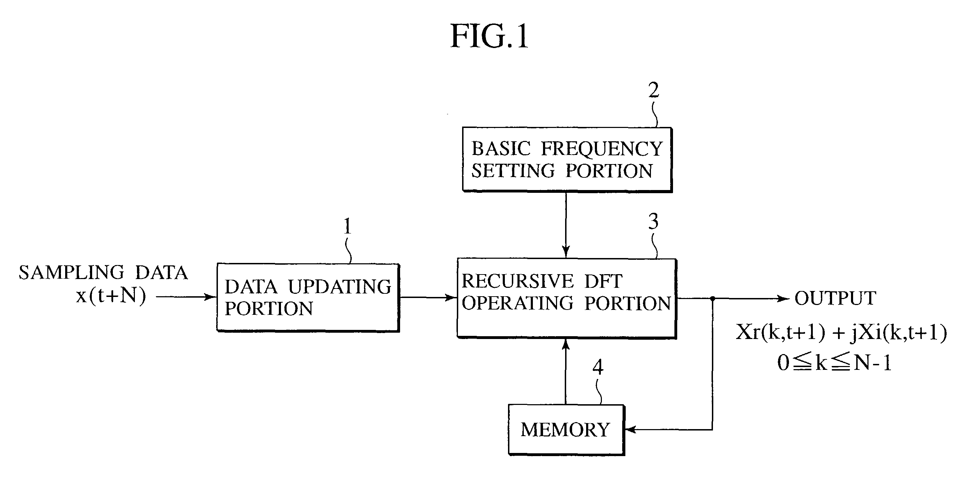

Fig.1 shows an embodiment of a recursive discrete Fourier transformation device applying the recursive discrete Fourier transformation method, which will be described below with reference to the same Figure.

The recursive discrete Fourier transformation device comprises a data updating portion 1 to which data sampled in a predetermined time interval is supplied and which stores temporarily supplied new N (N: positive integer) data therein, a basic frequency setting portion 2 in which the basic frequency for carrying out the discrete Fourier transformation is set up, a recursive DFT operating portion 3 for carrying out recursive DFT operation, and a memory 4 for storing temporarily computed data.

Next, an operation of the recursive discrete Fourier transformation device having such a structure will be described.

First, supplied data is sampled with a sampling circuit (not shown) every predetermined time interval and then, the sampled and quantitized discrete data is supplied to the data updating portion 1.

The sampling circuit samples data values supplied at every time of a predetermined interval, t, t+1, t+2, t+3, ..., t+N-1, t+N (N: natural number) and generates data streams x(t), x(t+1), x(t+2), x(t+3), ..., x(t+N-1), x(t+N) by converting the data values supplied at the respective times to sampling values corresponding to the respective times.

The operation of the sampling circuit is the same as that of an A/D converter which converts supplied analog signal to digital signal, converting an analog signal voltage value supplied at a predetermined time interval, given in the form of an inverse number of a sampling frequency, to a digital signal value. The converted digital signal value is a voltage having an analogous relation with an analog voltage, which gives a pulse amplitude modulation signal or that voltage value is expressed with a binary digital value.

In this manner, sampling data x(t) sampled at time t, x(t+1) sampled at time t+1, ..., x(t+N-1) sampled at t+N-1, x(t+N) sampled at time t+N, ..., are supplied to the data updating portion 1.

The data-updating portion 1 updates the newest N data (N: positive integer) of the supplied data, and stores them temporarily.

That is, data supply is started from x(t) and when data x(t+1), x(t+2), x(t+3) are supplied, all the supplied data x(t), x(t+1), x(t+2), x(t+3) are stored temporarily. This temporary storage operation is continued until data x(t+N-1) is entered and when data x(t+N-1) is entered, the total data number becomes N, so that data region of the data updating portion 1 becomes full.

When next data x(t+N) is supplied with such a condition, the total data number becomes N+1. Thus, the data updating portion 1 subtracts x(t) from x(t+N) and then supplies data obtained by that subtraction to the recursive DFT operating portion 3 while removing the oldest data x(t) from the memory portion. Consequently, the data updating portion 1 temporarily stores N data x(t+1), x(t+2), x(t+3), ..., x(t+N-1), x(t+N).

Likewise, when next data x(t+N+1) is supplied, the data updating portion 1 obtains x(t+N+1)-x(t+1) and supplies it to the recursive DFT operating portion 3 while removing x(t+1) from the memory. Consequently, the newest N data of supplied data is always stored in the data-updating portion 1 temporarily.

The N data stored temporarily is supplied to the recursive DFT operating portion 3 and a last FFT operation result stored in the memory 4 temporarily is supplied to the recursive DFT operating portion 3 as recursive data. Then, the recursive DFT operating portion 3 carries out recursive discrete Fourier transformation according to frequency resolution information set up by the basic frequency setting portion 2 in a manner described later and outputs a result of its arithmetic operation.

Next, this recursive discrete Fourier transformation operation method will de described in detail with reference to a conventional Fourier operation as well.

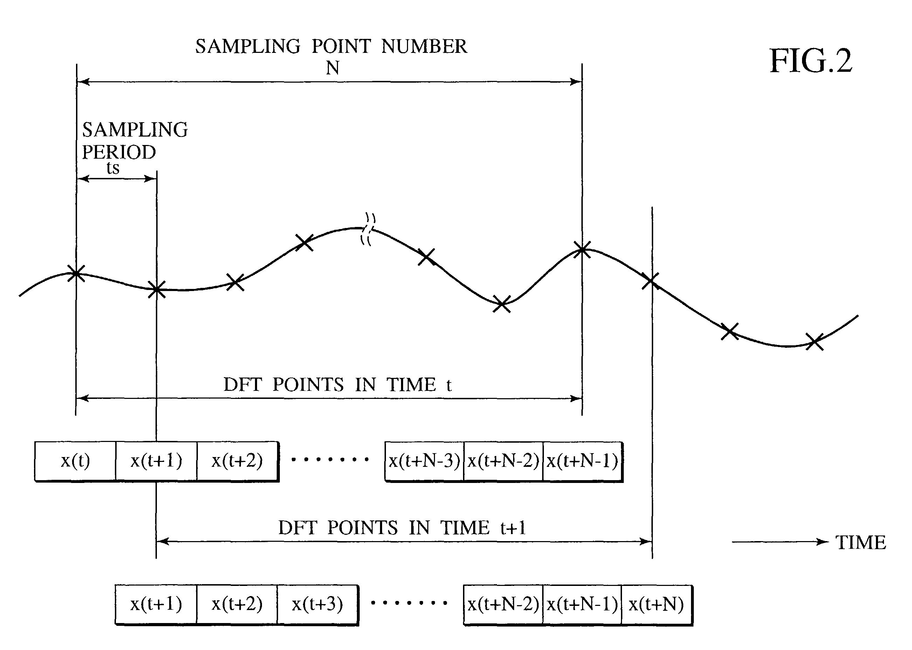

Fig.2 explains schematically a relation between data value obtained by sampling the waveform of supplied signal in a sampling period ts and corresponding DFT operation.

The same Figure shows a set of N real number data values x(t), x(t+1), x(t+2), x(t+3), ..., x(t+N-1) sampled in a predetermined sampling period from time t and a set of N real number data values x(t+1), x(t+2), x(t+3), ..., x(t+N-1), x(t+N) sampled from time t+1.

Then, the value X(k, t) of discrete Fourier transformation obtained with respect to data stream which is N real number data values sampled since time t is defined in the following expression.

$$X(k,t) = \frac{1}{\sqrt{N}} \sum_{n=t}^{t+N-1} x(n) \exp\left[-j2(n-t)\frac{\pi k}{N}\right] \qquad \cdots \ (2)$$

$$= \frac{1}{\sqrt{N}} \sum_{n=t}^{t+N-1} x(n)\cos\left[2(n-t)\frac{\pi k}{N}\right] - j\frac{1}{\sqrt{N}} \sum_{n=t}^{t+N-1} x(n)\sin\left[2(n-t)\frac{\pi k}{N}\right]$$

$$= X_r(k,t) - jX_i(k,t)$$

for k = 0, 1, ..., N-1

Transformation of real part $X_r(k, t)$ and imaginary part $X_i(k, t)$ of complex Fourier transformation of sampling data stream x(t) ~ x(t+N-1) supplied since arbitrary time t is defined as follows.

$$X_r(k,t) = \frac{1}{\sqrt{N}} \sum_{n=t}^{t+N-1} x(n)\cos\left[2(n-t)\frac{\pi k}{N}\right] \qquad \cdots (3)$$

$$X_i(k,t) = \frac{1}{\sqrt{N}} \sum_{n=t}^{t+N-1} x(n)\sin\left[2(n-t)\frac{\pi k}{N}\right] \qquad \cdots (4)$$

for k = 0, 1, ..., N-1

The transformation equation for the sampling data supplied since time t is defined in the above manner. Next, a transformation equation for a sampling data stream to be supplied since time t+1 will be described below.

That is, the sampling data stream supplied since the time t+1 is expressed as a set of x(t+1), x(t+2), x(t+3), ..., x(t+N-1), x(t+N). Because data x(t) is deleted from data stream supplied since time t while new data is added, transformation of the real part is expressed in a following equation and that expressed equation is developed as follows.

$$X(k,t+1) = \frac{1}{\sqrt{N}} \sum_{n=t+1}^{t+N} x(n)\cos\left[2(n-t-1)\frac{\pi k}{N}\right] \qquad \cdots (5)$$

$$= \frac{1}{\sqrt{N}}\left\{\sum_{n=t+1}^{t+N} x(n)\cos\left[2(n-t)\frac{\pi k}{N}\right]\cos\left[2\frac{\pi k}{N}\right] + \sum_{n=t+1}^{t+N} x(n)\sin\left[2(n-t)\frac{\pi k}{N}\right]\sin\left[2\frac{\pi k}{N}\right]\right\}$$

$$= Y_r(k,t+1)\cos\left[2\frac{\pi k}{N}\right] + Y_i(k,t+1)\sin\left[2\frac{\pi k}{N}\right]$$

where,

$$Y_r(k,t+1) = \frac{1}{\sqrt{N}} \sum_{n=t+1}^{t+N} x(n)\cos\left[2(n-t)\frac{\pi k}{N}\right] \qquad \cdots (6)$$

$$Y_i(k,t+1) = \frac{1}{\sqrt{N}} \sum_{n=t+1}^{t+N} x(n)\sin\left[2(n-t)\frac{\pi k}{N}\right] \qquad \cdots (7)$$

Then, if the oldest data x(t) is deleted and the newest data x(t+N) is incorporated, $Y_r$(k, t+1) can be expressed with $X_r$(k, t) and likewise, $Y_i$(k, t+1) can be also expressed with $X_i$(k, t).

As a result, the equation (6) and equation (7) are expressed as follows.

$$Y_r(k,t+1) = X_r(k,t) + \frac{1}{\sqrt{N}}[x(t+N)-x(t)] \qquad (8)$$

$$Y_i(k,t+1) = X_i(k,t) \qquad (9)$$

Next, the transformation equation for the imaginary part is also developed in the same way.

That is, when new data x(t+N) is supplied, the transformation of the imaginary part is also developed as shown in a following equation.

$$X_i\left(k,t+1\right) = \frac{1}{\sqrt{N}}\sum_{n=t+1}^{t+N}x(n)\sin\left[2(n-t-1)\frac{\pi k}{N}\right] \qquad \cdots \ (10)$$

$$= \frac{1}{\sqrt{N}}\left\{\sum_{n=t+1}^{t+N}x(n)\sin\left[2(n-t)\frac{\pi k}{N}\right]\cos\left[2\frac{\pi k}{N}\right] - \sum_{n=t+1}^{t+N}x(n)\cos\left[2(n-t)\frac{\pi k}{N}\right]\sin\left[2\frac{\pi k}{N}\right]\right\}$$

$$= Y_i\left(k,t+1\right)\cos\left[2\frac{\pi k}{N}\right] - Y_r\left(k,t+1\right)\sin\left[2\frac{\pi k}{N}\right]$$

Therefore, the equations (5), (10) can be expressed based on the relation of the equations (8), (9).

$$X_r\left(k,t+1\right) = \left\{X_r\left(k,t\right) + \frac{1}{\sqrt{N}}\left[x(t+N)-x(t)\right]\times\cos\left[2\frac{\pi k}{N}\right] + X_i\left(k,t\right)\sin\left[2\frac{\pi k}{N}\right]\right\} \quad (11)$$

$$X_i\left(k,t+1\right) = X_i\left(k,t\right)\cos\left[2\frac{\pi k}{N}\right] - \left\{X_r\left(k,t\right) + \frac{1}{\sqrt{N}}\left[x(t+N)-x(t)\right]\right\}\sin\left[2\frac{\pi k}{N}\right] \quad (12)$$

In this way, the discrete Fourier transformation at time t+1 can be executed according to the equations (11), (12) by using the result of the discrete Fourier arithmetic operation at time t recursively and further using data value which is a difference between newly fetched sample value x(t+N) and a sample value x(t) to be deleted.

It means that a result of Fourier transformation on the newest N-point data containing new data obtained by successive sampling at the sampling time interval shown in Fig.2 can be obtained.

Here, if it is regarded that the Fourier transformation executed in the above-described manner is a linearly invariable system in which continuous sampling data is supplied to a system having a certain coefficient and converted, this conversion processing can be regarded to be filtering processing.

Then, if 1/(square root of N) which gives an amplitude is assumed to be A and the real part $X_r$(k,t) and the imaginary part $X_i$(k,t) of Fourier coefficient with respect to data stream supplied since time t are assumed to be $y_{r,k}$(t) and $y_{i,k}$(t) respectively, the aforementioned equations (11), (12) are treated as a transformation equation of output y to input x, so that the transformation equation of the Fourier coefficient of data supplied since time t+1 can be expressed as follows.

$$y_{r,k}(t+1) = \left\{ y_{r,k}(t) + A[x(t+N) - x(t)] \right\} \times \cos\left[2\frac{\pi k}{N}\right] + y_{i,k}(t)\sin\left[2\frac{\pi k}{N}\right] \cdots (13)$$

$$y_{i,k}(t+1) = y_{i,k}(t)\cos\left[2\frac{\pi k}{N}\right] - \left\{ y_{r,k}(t) + A[x(t+N) - x(t)] \right\} \times \sin\left[2\frac{\pi k}{N}\right] \cdots (14)$$

$$(\text{where } A = \frac{1}{\sqrt{N}})$$

Further, if these equations (13), (14) are subjected to Z transformation, a result of the transformation can be expressed as shown in following equations (15), (16).

$$Y_{r,k}(z) = \left\{ Y_{r,k}(z)z^{-1} + A[X(z)z^{N} - X(z)] \right\} \times \cos\left[2\frac{\pi k}{N}\right] + Y_{i,k}(z)z^{-1}\sin\left[2\frac{\pi k}{N}\right] \cdots (15)$$

$$Y_{i,k}(z) = Y_{i,k}(z)z^{-1}\cos\left[2\frac{\pi k}{N}\right] - \left\{ Y_{r,k}(z)z^{-1} + A[X(z)z^{N} - X(z)] \right\}\sin\left[2\frac{\pi k}{N}\right] \cdots (16)$$

If a transfer function of output Y(z) to input X(z) is assumed to be H(z), H(z) is given in a following equation.

$$H(z) = Y(z)/X(z)$$

Then, if the equations (15), (16) are treated as simultaneous equations and it is intended to obtain each transfer function of the real part and imaginary part, they can be obtained as shown in following equations (17), (18).

$$H_r(z) = A(1 - z^{-N})\left\{ \frac{\cos\left[2\frac{\pi k}{N}\right] - z^{-1}}{1 - 2\cos\left[2\frac{\pi k}{N}\right]z^{-1} + z^{-2}} \right\} \cdots (17)$$

$$H_i(z) = A(1 - z^{-N})\left\{ \frac{-\sin\left[2\frac{\pi k}{N}\right]}{1 - 2\cos\left[2\frac{\pi k}{N}\right]z^{-1} + z^{-2}} \right\} \cdots (18)$$

Like this , a transfer function indicating the recursive DFT is expressed in a following equation (19).

$$H(z) = A\left(1 - z^{-N}\right)\left\{\frac{\cos\left[2\dfrac{\pi k}{N}\right] - j\sin\left[2\dfrac{\pi k}{N}\right] - z^{-1}}{1 - 2\cos\left[2\dfrac{\pi k}{N}\right]z^{-1} + z^{-2}}\right\} \qquad \cdots \; (19)$$

In this equation, $1-Z^{-N}$ indicates deletion of the oldest data upon updating the input data and a portion expressed with a fraction is so constructed that its numerator and its denominator are IIR filters (cyclic filter) having primary and secondary degrees respectively.

Although the DFT is a FIR filter for carrying out processing to a finite point number N, if it is achieved with a IIR filter as shown in the aforementioned equation, it can be constructed with a simpler hardware than the FIR filter.

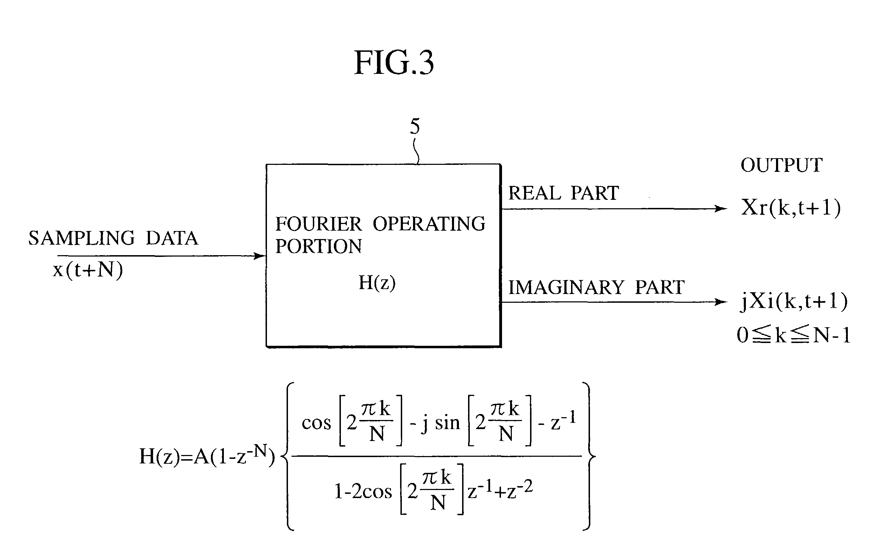

Fig.3 shows the structure for carrying out the discrete Fourier transformation achieved with the IIR filter.

In the same Figure, data sampled at a predetermined sampling clock, for example, data x(t+N) sampled at time t+N is supplied to a Fourier operating portion 5. Here, the supplied sampling data is computed by the characteristic of a transfer function indicated as H(z), so that $X_r(k, t+1)$ and $jX_i(k, t+1)$ are supplied as real part output and imaginary part output of the Fourier coefficient.

The Fourier operating portion 5 having the transfer function H(z) indicated by the equation (19) carries out IIR filtering operation in succession for every supplied sampling data and supplies results of the operation of the DFT transformation corresponding to the real part and the imaginary part.

That is, if data sampled at a certain sampling time t+1 is supplied to the Fourier operating portion 5, complex Fourier coefficient $X_r(k, t+1)-jX_i(k,t+1)$ corresponding to N sampling data supplied since the sampling time t+1 can be obtained.

As described above, the Fourier operating portion 5 can carry out Fourier transformation processing on continuously supplied data stream continuously at the sampling time interval. Then, a result of arithmetic operation can be obtained by changing analysis resolution in the Fourier transformation, so that high-resolution frequency analysis can be carried out in time direction by changing the length N of data stream supplied, for example, increasing the value of N.

As for the change of the analysis resolution, in case of adaptive signal processing to be carried out using a result of analysis by, for example, the DFT operation or adaptive control for control system, which is an object, the discrete Fourier transformation needs to be analyzed to arbitrary frequency band at an arbitrary resolution (frequency interval).

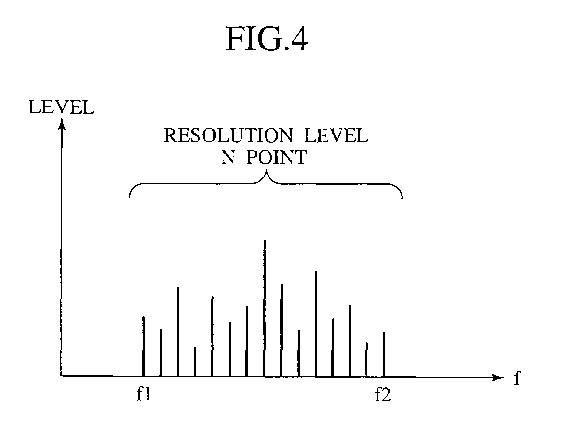

Fig.4 shows the relation of frequency, which should be obtained by an object discrete Fourier analysis.

The same Figure shows recursive discrete Fourier transformation in which the minimum frequency of a frequency band to be analyzed is f1 while the maximum frequency thereof is f2 and N-point resolution is provided between f1 and f2. Then, a method of carrying out the DFT under such indicated resolution will be described.

Setting of the resolution is carried out by the basic frequency setting portion 2 represented on the recursive discrete Fourier transformation device shown in Fig. 1 and based on the resolution information set up here, the Fourier transformation is carried out such that while the minimum frequency of arbitrary frequency band is f1 and the maximum frequency is f2, a desired resolution (frequency interval), indicated with any of values which divides an interval between f1 and f2 to N, is N point.

A method of carrying out the discrete Fourier transformation operation with a desired resolution in a desired arbitrary frequency band at every sampling time interval will be described in detail.

In the equations (11) and (12), or (19) used for carrying out the recursive discrete Fourier transformation, cos $[2\pi k/N]$ and sin$[2\pi k/N]$ expressed with circular functions indicate basic functions relating to analysis point number N which should be obtained by operation.

Therefore, the values of f1, f2 and fs are set up so that k/N relating to the basic frequency indicated in the circular functions coincides with a desired frequency band.

Here, it is assumed that basic frequency a of a basic function corresponding to the minimum frequency f1 is $a = f1/fs$ and basic frequency $\beta$ of a basic function corresponding to the maximum frequency f2 is $\beta = f2/fs$.

Then, when the resolution is N points, the basic frequency in the frequency band of f1 to f2 is as follows.

$$\left(\frac{\beta - \alpha}{N - 1}\right)k + \alpha$$

(where k = 0 ~ N-1)

Therefore, by replacing the basic frequency k/N in the equations (11) and (12) or (19) with a following equation (20), it is possible to obtain recursive Fourier transformation equation adaptive for transformation with a desired arbitrary resolution in an arbitrary frequency band desired to be analyzed.

$$\frac{1}{fs}\left\{\frac{(f2-f1)k}{N-1}+f1\right\} \qquad \cdots \ (20)$$

(where $0 \le k \le N - 1$)

Equations for carrying out transformation at an arbitrary frequency resolution, which corresponds to the equations (11), (12) are expressed as equations (21), (22).

$$X_r(k,t+1) = \left\{X_r(k,t)+\frac{1}{A}[x(t+N)-x(t)]\right\}$$

$$\times \cos\left\{2\frac{\pi}{fs}\left[\frac{(f2-f1)k}{N-1}+f1\right]\right\}$$

$$+ X_i(k,t)\sin\left\{2\frac{\pi}{fs}\left[\frac{(f2-f1)k}{N-1}+f1\right]\right\} \qquad \cdots \ (21)$$

$$X_i(k,t+1) = X_i(k,t)$$

$$\times \cos\left\{2\frac{\pi}{fs}\left[\frac{(f2-f1)k}{N-1}+f1\right]\right\}$$

$$-\left\{X_r(k,t)+\frac{1}{A}[x(t+N)-x(t)]\right\}$$

$$\times \sin\left\{2\frac{\pi}{fs}\left[\frac{(f2-f1)k}{N-1}+f1\right]\right\} \qquad \cdots \ (22)$$

An equation for carrying out transformation at an arbitrary frequency resolution, which corresponds to the equation (19), is expressed as an equation (23).

$$H(z) = A(1-Z^{-N})\left\{\frac{\cos[2\pi p]-j\sin[2\pi p]-z^{-1}}{1-2\cos[2\pi p]z^{-1}+z^{-2}}\right\} \qquad \cdots \ (23)$$

where A is a positive constant for providing [x(t+N) - x(t)] with an amplitude value, and

$$p = \frac{1}{fs}\left\{\frac{(f2-f1)k}{N-1}+f1\right\}, \quad 0 \le k \le N-1$$

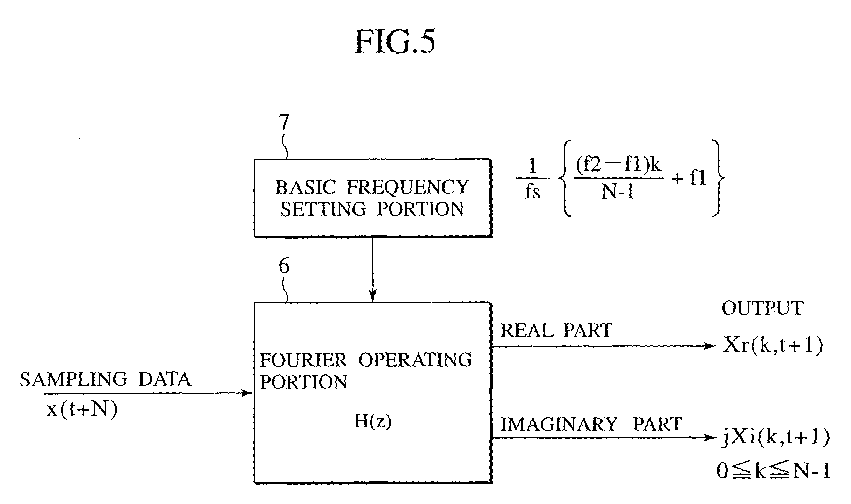

Fig.5 shows the structure for carrying out the Fourier transformation at an arbitrary frequency resolution.

In the same Figure, sampling data sampled at every equal time interval is supplied to a Fourier operating portion 6, which is a linearly invariable system, in succession, so that for example, data x(t+N) is supplied at time t+N.

At this time, a basic frequency setting portion 7 sets up a lower limit frequency f1 and a upper limit frequency f2 of an arbitrary frequency band to be analyzed and then a desired resolution N. Then, a basic frequency to be transformed is determined according to the aforementioned equation (20) and supplied to the Fourier operating portion 6, which is a linearly invariable system. The Fourier operating portion 6 carries out IIR filter processing having a transfer function indicated by the aforementioned equation (19) according to the basic frequency.

The Fourier operating portion 6 supplies $X_r$(k, t+1) as the real part of the Fourier coefficient to N sampling data supplied since time t+1 and $X_i$(k, t+1) as the imaginary part thereof. Consequently, the DFT arithmetic operation can be carried out in a desired arbitrary frequency band at a desired resolution at every sampling time interval.

As described above, recursive discrete Fourier transformation operation, in which the resolution is set up arbitrarily for analysis, can be executed. This Fourier transformation processing can be carried out based on the equations (11) and (12), or equation (19) for every sampling value supplied newly. By changing the value of k to 0, 1, 2, ..., N-1 in that operation, a result of transformation processing under each basic frequency set corresponding to each k is provided.

Because in the transformation equation for conducting recursive discrete Fourier transformation operation, the basic frequency set by a predetermined k value is capable of obtaining a result of transformation processing independently of analysis on the basic frequency set by other k value, a result of Fourier transformation operation on a specific basic frequency relating to arbitrary k value may be obtained independently.

Then, because when attention is paid to a specific frequency point or k is assumed to be a specific value, the value of circular functions in the equations (11) and (12), or equation (19) is a constant. Thus, by using the aforementioned definition equation (1) for the discrete Fourier transformation, which has been employed since before, a result of the Fourier operation relating to that basic function can be obtained more easily than the Fourier transformation relating to a specific basic function.

Because the arithmetic operation for the signal component relating to the specific basic function is more difficult in case of the FFT which uses butterfly operation, the recursive discrete Fourier transformation method shown here is expected to be widely applied as a signal analysis method, which will be employed in more diversified ways in future.

The recursive discrete Fourier transformation method has been described above. Because this transformation method is capable of selecting a basic frequency preferable for analysis, the number of points to be handled is not restricted to power of 2 unlike in case of the FFT, so that any positive integer can be adopted.

Although in the above description, it is assumed that the sampling data to be supplied is real number data, even if the sampling data is complex data like shown below, it can be expanded.

Specifically, in case where the sampling data is complex data, an equation corresponding to the equations (3), (4) is as follows.

$$X_r(k,t+1) = \left\{X_r(k,t)+\frac{1}{A}\left[x_r(t+N)+x_r(t)\right]\right\}\cos\left[2\frac{\pi k}{N}\right]$$

$$-\left\{X_i(k,t)+\frac{1}{A}\left[x_i(t+N)-x_i(t)\right]\right\}\sin\left[2\frac{\pi k}{N}\right] \qquad \cdots \ (24)$$

$$X_i(k,t+1) = \left\{ X_i(k,t) + \frac{1}{A}\left[x_i(t+N) - x_i(t)\right] \right\} \cos\left[2\frac{\pi k}{N}\right]$$

$$+ \left\{ X_r(k,t) + \frac{1}{A}\left[x_r(t+N) - x_r(t)\right] \right\} \sin\left[2\frac{\pi k}{N}\right] \qquad \cdots \ (25)$$

(where, $A = \sqrt{N}$, $0 \le k \le N - 1$)

Next, inverse discrete Fourier transformation, which is a second embodiment achieved by applying the above discrete Fourier transformation technology, will be described below.

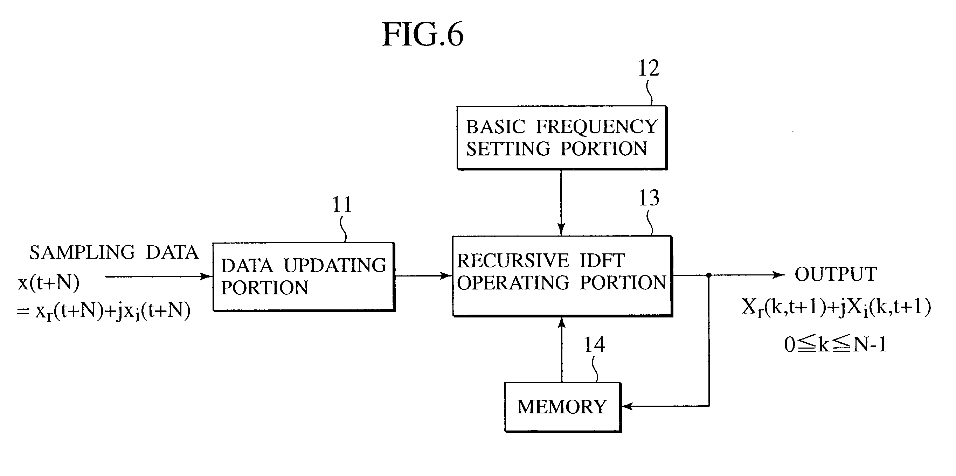

Fig.6 shows an embodiment of the recursive inverse discrete Fourier transformation device, to which the recursive inverse discrete Fourier transformation method is applied. This embodiment will be described with reference to the same Figure. It is assumed that the sampling data to be supplied is complex data.

This recursive inverse discrete Fourier transformation device comprises a data updating portion 11, which is supplied with data sampled at every predetermined time interval, for storing supplied new N data (N: positive integer) temporarily, a basic frequency setting portion 12 for setting the basic frequency for carrying out the inverse discrete Fourier transformation, a recursive inverse discrete Fourier transformation (IDFT) operating portion 13 and a memory portion 14 for storing computed data temporarily.

An operation of the recursive inverse discrete Fourier transformation device having such a structure will be described.

First, supplied complex data is sampled by a sampling circuit (not shown) at every predetermined time interval, so that discrete data of the real part and imaginary part, sampled and quantitized, are supplied to the data updating portion 11.

The sampling circuit samples data values supplied at times t, t+1, t+2, t+3, ..., t+N-1, t+N (N: natural number) each having an equal interval so as to generate data stream $x_r(t) + jx_i$, $x_r(t+1) + jx_i(t+1)$, $x_r(t+2) + jx_i(t+2)$, $x_r(t+3) + jx_i(t+3)$, ..., $x_r(t+N-1) + jx_i(t+N-1)$, $x_r(t+N) + jx_i(t+N)$ with data value supplied at each time as sampling value corresponding to each time.

In this manner, the sampling data $x_r(t) + jx_i(t)$ sampled at time t, $x_r(t+1) + jx_i(t+1)$ at time t+1, ..., $x_r(t+N-1) + jx_i(t+N-1)$ at time t+N-1, ..., $x_r(t+N-1) + jx_i(t+N-1)$ at time t+N-1, $x_r(t+N) + jx_i(t+N)$ at time t+N ..., are supplied to the data updating portion 11. The data updating portion 11 updates complex data of new N data (N: positive integer) of the supplied data and stores them therein temporarily.

The N data stored temporarily is supplied to the recursive IDFT operating portion 13 and a last FFT operation result stored in the memory 14 temporarily is supplied to the recursive IDFT operating portion 13 as recursive data. Then, the recursive IDFT operating portion 13 carries out recursive discrete inverse Fourier transformation according to frequency resolution information set up by the basic frequency setting portion 12 in a manner described later and outputs a result of its arithmetic operation.

Then, the operation result subjected to inverse discrete Fourier transformation by operation by the recursive IDFT operating portion 13 is supplied to the memory portion 14 and stored therein temporarily. The temporarily stored operation result is supplied to the recursive IDFT operating portion 13. Here, the IDFT operation for next supplied data is carried out, so that the result of the IDFT operation is used recursively.

Next, the IDFT operation, which is carried out recursively, will be described in detail.

Inverse Fourier transformation X(k,t) at arbitrary time t is defined according to a following equation (26).

$$X(k,t) = \frac{1}{\sqrt{N}} \sum_{n=t}^{1+N-1} x(n) \exp\left\{ j2(n-t)\frac{\pi k}{N} \right\} \qquad \cdots \ (26)$$

$$= \left\{ \frac{1}{\sqrt{N}} \sum_{n=t}^{1+N-1} x_r(n) \cos\left[2(n-t)\frac{\pi k}{N}\right] - \frac{1}{\sqrt{N}} \sum_{n=t}^{1+N-1} x_i(n) \sin\left[2(n-t)\frac{\pi k}{N}\right] \right\}$$

$$+ j\left\{ \frac{1}{\sqrt{N}} \sum_{n=t}^{1+N-1} x_r(n) \sin\left[2(n-t)\frac{\pi k}{N}\right] + \frac{1}{\sqrt{N}} \sum_{n=t}^{1+N-1} x_i(n) \cos\left[2(n-t)\frac{\pi k}{N}\right] \right\}$$

$$= X_r(k,t) + jX_i(k,t)$$

for k = 0,1, ...., N-1

Data stream x(n) supplied here is complex number, which is a number expressed like $x(n) = x_r(n) + jx_i(n)$.

The recursive inverse discrete Fourier transformation is carried out for N complex data supplied in this manner and its arithmetic operation is carried out through the same processing as the aforementioned recursive DFT transformation method.

In this operation, complex Fourier coefficient $X_r(k, t+1) + jX_i(k, t+1)$ at sampling time t+1 can be obtained according to following equations (27), (28) by using a difference between newly complex data $x_r(t+N) + jx_i(t+N)$ sampled and fetched at sampling time t+1 and the oldest complex data $x_r(t) + jx_i(t)$ of N-data stream and complex Fourier coefficient $X_r(k, t) + jX_i(k, t)$ already obtained at sampling time t.

$$X_r(k,t+1) = \left\{ X_r(k,t) + \frac{1}{B}\left[x_r(t+N) - x_r(t)\right] \right\} \cos\left[2\frac{\pi k}{N}\right]$$

$$+ \left\{ X_i(k,t) + \frac{1}{B}\left[x_i(t+N) - x_i(t)\right] \right\} \sin\left[2\frac{\pi k}{N}\right] \qquad \cdots \ (27)$$

$$X_i(k,t+1) = \left\{ X_i(k,t) + \frac{1}{B}\left[x_i(t+N) - x_i(t)\right] \right\} \cos\left[2\frac{\pi k}{N}\right]$$

$$- \left\{ X_r(k,t) + \frac{1}{B}\left[x_r(t+N) - x_r(t)\right] \right\} \sin\left[2\frac{\pi k}{N}\right] \qquad \cdots \ (28)$$

(where, $B = \sqrt{N}$, $0 \le k \le N - 1$)

The recursive IDFT transformation is carried out in the above way. Like the Fourier transformation, the inverse Fourier transformation is also capable of transforming the newest N-point data stream containing new data, which is sampled successively at every sampling time interval shown in Fig.2.

Meanwhile, in case where the sampling data is complex data, an equation corresponding to the equations (21), (22) is as follows.

$$X_r(k,t+1) = \left\{ X_r(k,t) + \frac{1}{A}\left[x_r(t+N) - x_r(t)\right] \right\} \times \cos\left\{ 2\frac{\pi}{fs}\left[\frac{(f2-f1)k}{N-1} + f1\right]\right\}$$

$$- \left\{ X_i(k,t) + \frac{1}{A}\left[x_i(t+N) - x_i(t)\right] \right\} \times \sin\left\{ 2\frac{\pi}{fs}\left[\frac{(f2-f1)k}{N-1} + f1\right]\right\} \cdots \quad (29)$$

$$X_i(k,t+1) = \left\{ X_i(k,t) + \frac{1}{A}\left[x_i(t+N) - x_i(t)\right] \right\} \times \cos\left\{ 2\frac{\pi}{fs}\left[\frac{(f2-f1)k}{N-1} + f1\right]\right\}$$

$$+ \left\{ X_r(k,t) + \frac{1}{A}\left[x_r(t+N) - x_r(t)\right] \right\} \times \sin\left\{ 2\frac{\pi}{fs}\left[\frac{(f2-f1)k}{N-1} + f1\right]\right\} \cdots \quad (30)$$

Corresponding to the equations (29), (30), an equation for carrying out inverse transformation at an arbitrary frequency resolution is expressed in the form of equations (31), (32).

$$X_r(k,t+1) = \left\{ X_r(k,t) + \frac{1}{B}\left[x_r(t+N) - x_r(t)\right] \right\} \times \cos\left\{ 2\frac{\pi}{fs}\left[\frac{(f2-f1)k}{N-1} + f1\right]\right\}$$

$$+ \left\{ X_i(k,t) + \frac{1}{B}\left[x_i(t+N) - x_i(t)\right] \right\} \times \sin\left\{ 2\frac{\pi}{fs}\left[\frac{(f2-f1)k}{N-1} + f1\right]\right\} \cdots \quad (31)$$

$$X_i(k,t+1) = \left\{ X_i(k,t) + \frac{1}{B}\left[x_i(t+N) - x_i(t)\right] \right\} \times \cos\left\{ 2\frac{\pi}{fs}\left[\frac{(f2-f1)k}{N-1} + f1\right]\right\}$$

$$- \left\{ X_r(k,t) + \frac{1}{B}\left[x_r(t+N) - x_r(t)\right] \right\} \times \sin\left\{ 2\frac{\pi}{fs}\left[\frac{(f2-f1)k}{N-1} + f1\right]\right\} \cdots \quad (32)$$

It should be understood that many modifications and adaptations of the invention will become apparent to those skilled in the art and it is intended to encompass such obvious modifications and changes in the scope of the claims appended hereto.

**Claims**

1.   A recursive discrete Fourier transformation method whereindatavaluesx(t), x(t+1),x(t+2),x(t+3), ..., x(t+N-1), x(t+N) sampled at times t, t+1, t+2, t+3, ..., t+N-1, t+N (N is a positive integer which is 1 or more) each having an equal interval are supplied and with such N data values supplied since time t as a data stream, a frequency component, which is degree k (k is 0 or a positive integer smaller than N) obtained by carrying out complex Fourier transformation on the data stream, is obtained such that a real part $X_r(k, t)$ thereof and an imaginary part $X_i(k, t)$ thereof are complex Fourier coefficients, the method comprising:

a first step of storing the data stream x(t), x(t+1), x(t+2), x(t+3), ..., x(t+N-1) supplied since time t at time t+N-1 into a first memory means (1) temporarily;

a second step of obtaining the complex Fourier coefficients $X_r(k, t)$ and $X_i(k, t)$ of the data stream stored temporarily at the first step;

a third step of storing the complex Fourier coefficients $X_r(k, t)$ and $X_i(k, t)$ obtained at the second step into the second memory means (4) temporarily; and

a fourth step of by using data value x(t+N) supplied at time t+N, data value x(t) stored in the first memory means (1) temporarily and the complex Fourier coefficients $X_r(k, t)$, $X_i(k,t)$ stored in the second memory means (4) temporarily, obtaining complex Fourier coefficients $X_r(k, t+1)$ and $X_i(k, t+1)$ to the data stream supplied since time t+1 with respect to a positive constant value A for giving an amplitude value corresponding to a difference between the x(t+N) and the x(t) according to a following equation:

$$X_r(k,t+1) = \left\{ X_r(k,t) + \frac{1}{A}\left[x(t+N) - x(t)\right] \right\} \times \cos\left[2\frac{\pi k}{N}\right] + X_i(k,t)\sin\left[2\frac{\pi k}{N}\right]$$

$$X_i(k,t+1) = X_i(k,t)\cos\left[2\frac{\pi k}{N}\right] - \left\{ X_r(k,t) + \frac{1}{A}\left[x(t+N) - x(t)\right] \right\}\sin\left[2\frac{\pi k}{N}\right]$$

2. A recursive discrete Fourier transformation method according to claim 1 wherein inverse discrete Fourier transformation data subjected to inverse discrete Fourier transformation using a positive constant **a** is supplied so as to obtain a complex Fourier transformation coefficient to the supplied inverse discrete Fourier transformation data, the discrete Fourier transformation being carried out using the positive constant A corresponding to the positive constant **a**.

3. A recursive discrete Fourier transformation method according to claim 1 wherein **k** indicating a degree of the complex Fourier coefficient is set to a desired value and Fourier transformation to the set value **k** is repeated at every time having an equal interval.

4. A recursive discrete Fourier transformation method wherein with sampling frequency as fs, data values x(t), x(t+1), x(t+2), x(t+3), ..., x(t+N-1), x(t+N) sampled at times t, t+1, t+2, t+3, ..., t+N-1, t+N (N is a positive integer which is 1 or more) each having an equal interval are supplied and with such N data values supplied since time t as a data stream, a frequency interval given with a minimum frequency f1 and a maximum frequency f2 to the data stream is regarded as a measuring frequency interval, a frequency interval obtained by dividing that measuring frequency interval by the N is assumed to be an analysis frequency interval and a result of the frequency analysis obtained by carrying out complex Fourier transformation at every analysis frequency interval is obtained as a frequency component which is k (k is 0 or a positive integer smaller than N) times the frequency interval, such that a real part $X_r(k, t)$ thereof and an imaginary part $X_i(k, t)$ thereof are complex Fourier coefficients, the method comprising:

a first step of storing the data stream x(t), x(t+1), x(t+2), x(t+3), ..., x(t+N-1) supplied since time t at time t+N-1 into a first memory means (1) temporarily;

a second step of obtaining the complex Fourier coefficients $X_r(k, t)$ and $X_i(k, t)$ of the data stream stored temporarily at the first step;

a third step of storing the complex Fourier coefficients $X_r(k, t)$ and $X_i(k, t)$ obtained at the second step into the second memory means (4) temporarily; and

a fourth step of by using data value x(t+N) supplied at time t+N, data value x(t) stored in the first memory means (1) temporarily and the complex Fourier coefficients $X_r(k, t)$, $X_i(k,t)$ stored in the second memory means (4) temporarily, obtaining complex Fourier coefficients $X_r(k, t+1)$ and $X_i(k, t+1)$ within the frequency interval with the minimum frequency f1 and the maximum frequency f2 to the data stream supplied since time t+1 with respect to a positive constant A for giving an amplitude corresponding to a difference between the x(t+N) and the x(t) according to following equations:

$$X_r(k,t+1) = \left\{ X_r(k,t) + \frac{1}{A}[x(t+N)-x(t)] \right\} \times \cos\left\{ 2\frac{\pi}{fs}\left[\frac{(f2-f1)k}{N-1}+f1\right] \right\}$$

$$+ X_i(k,t)\sin\left\{ 2\frac{\pi}{fs}\left[\frac{(f2-f1)k}{N-1}+f1\right] \right\}$$

$$X_i(k,t+1) = X_i(k,t)\times\cos\left\{ 2\frac{\pi}{fs}\left[\frac{(f2-f1)k}{N-1}+f1\right] \right\} - \left\{ X_r(k,t)+\frac{1}{A}[x(t+N)-x(t)] \right\}$$

$$\times\sin\left\{ 2\frac{\pi}{fs}\left[\frac{(f2-f1)k}{N-1}+f1\right] \right\}$$

5. A recursive discrete Fourier transformation method according to claim 4 wherein inverse discrete Fourier transformation data subjected to inverse discrete Fourier transformation using a positive constant **a** is supplied so as to obtain a complex Fourier transformation coefficient to the supplied inverse discrete Fourier transformation data, the discrete Fourier transformation being carried out using the positive constant A corresponding to the positive constant **a**.

6. A recursive discrete Fourier transformation method according to claim 4 wherein **k** indicating a degree of the complex Fourier coefficient is set to a desired value and Fourier transformation to the set value **k** is repeated at every time having an equal interval.

7. A recursive discrete Fourier transformation method wherein data values x(t),x(t+1),x(t+2),x(t+3), ..., x(t+N-1), x(t+N) sampled at times t, t+1, t+2, t+3, ..., t+N-1, t+N (N is a positive integer which is 1 or more) each having an equal interval are supplied and with such N data values supplied since time t as a data stream, a frequency component, which is degree k (k is 0 or a positive integer smaller than N) obtained by carrying out complex Fourier transformation on the data stream, is obtained such that a real part $X_r(k, t)$ thereof and an imaginary part $X_i(k, t)$ thereof are complex Fourier coefficients, the method comprising:

a first step of storing the data stream x(t), x(t+1), x(t+2), x(t+3), ..., x(t+N-1) supplied since time t at time t+N-1 into a first memory means (1) temporarily;
a second step of obtaining the complex Fourier coefficients $X_r(k, t)$ and $X_i(k, t)$ of the data stream stored temporarily at the first step;
a third step of storing the complex Fourier coefficients $X_r(k, t)$ and $X_i(k, t)$ obtained at the second step into the second memory means (4) temporarily; and
a fourth step of by using the complex Fourier coefficients $X_r(k, t) - jX_i(k, t)$ stored in the second memory means (4) temporarily, obtaining complex Fourier coefficients $X_r(k, t+1) - jX_i(k, t+1)$ to the data stream supplied since time t+1 based on a transfer function expressed in a following equation.

$$H(z) = A\left(1-z^{-N}\right)\left\{ \frac{\cos\left[2\frac{\pi k}{N}\right] - j\sin\left[2\frac{\pi k}{N}\right] - z^{-1}}{1 - 2\cos\left[2\frac{\pi k}{N}\right]z^{-1} + z^{-2}} \right\}$$

where A is a positive constant for providing [x(t+N) - x(t)] with an amplitude.

8. A recursive discrete Fourier transformation method according to claim 7 wherein the positive constant value A for providing with an amplitude corresponding to a difference between the x(t+N) and the x(t) is capable of being set selectively with an inverse number of square root of 1, N or 1/N.

9. A recursive discrete Fourier transformation method according to claim 7 wherein **k** indicating the degree of the complex Fourier coefficient is set to a desired value and the Fourier transformation to the set value **k** is repeated at every time having an equal interval.

10. A recursive discrete Fourier transformation method wherein with sampling frequency as fs, data values x(t), x (t+1), x(t+2), x(t+3), ..., x(t+N-1), x(t+N) sampled at times t, t+1, t+2, t+3, ..., t+N-1, t+N (N is a positive integer which is 1 or more) each having an equal interval are supplied and with such N data values supplied since time t as a data stream, a frequency interval given with a minimum frequency f1 and a maximum frequency f2 to the data stream is regarded as a measuring frequency interval, a frequency interval obtained by dividing that measuring frequency interval by the N is assumed to be an analysis frequency interval and a result of the frequency analysis provided by carrying out complex Fourier transformation at every analysis frequency interval is obtained as a frequency component which is k (kis 0 or a positive integer smaller than N) times the frequency interval, such that a real part $X_r(k, t)$ thereof and an imaginary part $X_i(k, t)$ thereof are complex Fourier coefficients, the method comprising:

a first step of storing the data stream x(t), x(t+1), x(t+2), x(t+3), ..., x(t+N-1) supplied since time t at time t+N-1 into a first memory means (1) temporarily;
a second step of obtaining the complex Fourier coefficients $X_r(k, t+1) - jX_i(k, t+1)$ of the data stream stored temporarily at the first step;
a third step of storing the complex Fourier coefficients $X_r(k, t+1) - jX_i(k, t+1)$ obtained at the second step into the second memory means (4) temporarily; and
a fourth step of by using the complex Fourier coefficient $X_r(k, t) - jX_i(k, t)$ stored in the second memory means (4) temporarily, obtaining complex Fourier coefficients $X_r(k, t+1) - jX_i(k, t+1)$ at the frequency interval given by the minimum frequency f1 and the maximum frequency f2 to the data stream supplied since time t+1 based on a transfer function expressed in a following equation:

$$H(z) = A\left(1 - z^{-N}\right)\left\{\frac{\cos[2\pi\,p] - j\sin[2\pi\,p] - z^{-1}}{1 - 2\cos[2\pi\,p]z^{-1} + z^{-2}}\right\}$$

where A is a positive constant for providing [x(t+N) - x(t)] with an amplitude value, and

$$p = \frac{1}{fs}\left\{\frac{(f2 - f1)k}{N - 1} + f1\right\}, \qquad 0 \le k \le N - 1$$

11. A recursive discrete Fourier transformation method according to claim 10 wherein the positive constant value A for providing with an amplitude corresponding to a difference between the x(t+N) and the x(t) is capable of being set selectively with an inverse number of square root of 1, N or 1/N.

12. A recursive discrete Fourier transformation method according to claim 10 wherein **k** indicating the degree of the complex Fourier coefficient is set to a desired value and the Fourier transformation to the set value **k** is repeated at every time having an equal interval.

13. A recursive discrete Fourier transformation method for obtaining complex Fourier coefficients, wherein data values $x_r(t) + jx_i(t)$, $x_r(t+1) + jx_i(t+1)$, $x_r(t+2) + jx_i(t+2)$, $x_r(t+3) + jx_i(t+3)$, ..., $x_r(t+N-1) + jx_i(t+N-1)$, $x_r(t+N) + jx_i(t+N)$ sampled at times t, t+1, t+2, t+3 , ..., t+N-1, t+N (N is a positive integer which is 1 or more) each having an equal interval are supplied and with such N data values supplied since time t as a data stream, a frequency component, which is degree k (k is 0 or a positive integer smaller than N) obtained by carrying out complex Fourier transformation on the data stream, is obtained such that a real part $X_r(k, t)$ thereof and an imaginary part $X_i(k, t)$ thereof are complex Fourier coefficients, the method comprising:

a first step of storing the data stream $x_r(t) + jx_i(t)$, $x_r(t+1) + jx_i(t+1)$, $x_r(t+2) + jx_i(t+2)$, $x_r(t+3) + jx_i(t+3)$, ..., $x_r(t+N-1) + jx_i(t+N-1)$ supplied since time t at time t+N-1 into a first memory means (1) temporarily;

a second step of obtaining the complex Fourier coefficients $X_r(k, t)$ and $X_i(k, t)$ of the data stream stored temporarily at the first step;

a third step of storing the complex Fourier coefficients $X_r(k, t)$ and $X_i(k, t)$ obtained at the second step into the second memory means (4) temporarily; and

a fourth step of by using the data value $x_r(t+N) + jx_i(t+N)$ supplied at time t+N, the data value $x_r(t) + jx_i(t)$ stored in the first memory means (1) temporarily and the complex Fourier coefficient $X_r(k, t)$ and $X_i(k, t)$ stored in the second memory means (4) temporarily and used recursively, obtaining complex Fourier coefficients $X_r(k, t+1)$ and $X_i(k, t+1)$ to the data stream supplied since time t+1 with respect to a positive constant A for giving an amplitude value corresponding to the difference between the $x_r(t+N)$ and the $x_r(t)$ according to a following equation:

$$X_r(k,t+1) = \left\{ X_r(k,t) + \frac{1}{A}[x_r(t+N) - x_r(t)] \right\} \cos\left[2\frac{\pi k}{N}\right]$$

$$- \left\{ X_i(k,t) + \frac{1}{A}[x_i(t+N) - x_i(t)] \right\} \sin\left[2\frac{\pi k}{N}\right]$$

$$X_i(k,t+1) = \left\{ X_i(k,t) + \frac{1}{A}[x_i(t+N) - x_i(t)] \right\} \cos\left[2\frac{\pi k}{N}\right]$$

$$+ \left\{ X_r(k,t) + \frac{1}{A}[x_r(t+N) - x_r(t)] \right\} \sin\left[2\frac{\pi k}{N}\right]$$

14. A recursive discrete Fourier transformation method according to claim 13 wherein by using data value $y_r(t) + jy_i(t)$ supplied at time t, data value $y_r(t+N) + jy_i(t+N)$ supplied at time t+N and complex inverse discrete Fourier coefficients $Y_r(k, t)$ and $Y_i(k, t)$ with the real part and the imaginary part obtained with respect to N data values $y_r(t) + jy_i(t)$, $y_r(t+1) + jy_i(t+1)$, ..., $y_r(t+N-1) + jy_i(t+N-1)$ supplied from time t to time t+N-1,

a real part $Y_r(k, t+1)$ and an imaginary part $Y_i(k, t+1)$ of each complex inverse discrete Fourier coefficient of N data values supplied since time t+1 are obtained with respect to a positive constant value B for giving an amplitude corresponding to a difference between the $y_r(t+N)$ and the $y_r(t)$ as inverse discrete Fourier transformation data, according to following equations,

$$Y_r(k,t+1) = \left\{ Y_r(k,t) + \frac{1}{B}[y_r(t+N) - y_r(t)] \right\} \cos\left[2\frac{\pi k}{N}\right]$$

$$+ \left\{ Y_i(k,t) + \frac{1}{B}[y_i(t+N) - y_i(t)] \right\} \sin\left[2\frac{\pi k}{N}\right]$$

$$Y_i(k,t+1) = \left\{ Y_i(k,t) + \frac{1}{B}[y_i(t+N) - y_i(t)] \right\} \cos\left[2\frac{\pi k}{N}\right]$$

$$- \left\{ Y_r(k,t) + \frac{1}{B}[y_r(t+N) - y_r(t)] \right\} \sin\left[2\frac{\pi k}{N}\right]$$

and after the obtained inverse discrete Fourier transformation data is supplied, discrete Fourier transformation on the supplied inverse discrete Fourier transformation data is carried out,
the recursive discrete Fourier transformation conducting discrete Fourier transformation by using the positive constant value A corresponding to the positive constant value B.

15. A recursive discrete Fourier transformation method according to claim 13 wherein **k** indicating the degree of the complex Fourier coefficient is set to a desired value and the Fourier transformation to the set value **k** is repeated at every time having an equal interval.

16. A recursive discrete Fourier transformation method for obtaining complex Fourier coefficients, wherein with sampling frequency as fs, data values $x_r(t) + jx_i(t)$, $x_r(t+1) + jx_i(t+1)$, $x_r(t+2) + jx_i(t+2)$, $x_r(t+3) + jx_i(t+3)$, ..., $x_r(t+N-1) + jx_i(t+N-1)$, $x_r(t+N) + jx_i(t+N)$ sampled at times t, t+1, t+2, t+3, ..., t+N-1, t+N (N is a positive integer which is 1 or more) each having an equal interval are supplied and with such N complex data values supplied since time t as a data stream, a frequency interval given with a minimum frequency f1 and a maximum frequency f2 to the data stream is regarded as a specified frequency interval, a frequency interval obtained by dividing the specified frequency interval by the N is assumed to be a minimum frequency interval and a result of the Fourier transformation provided by carrying out complex Fourier transformation at every minimum frequency interval is obtained as a frequency component which is k (k is 0 or a positive integer smaller than N) times the minimum frequency interval, such that a real part $X_r(k, t)$ thereof and an imaginary part $X_i(k, t)$ thereof are complex Fourier coefficients, the method comprising:

a first step of storing the data stream $x_r(t) + jx_i(t)$, $x_r(t+1) + jx_i(t+1)$, $x_r(t+2) + jx_i(t+2)$, $x_r(t+3) + jx_i(t+3)$, ..., $x_r(t+N-1) + jx_i(t+N-1)$, $x_r(t+N) + jx_i(t+N)$ supplied since time t at time t+N-1 into a first memory means (4) temporarily;
a second step of obtaining the complex Fourier coefficients $X_r(k, t)$ and $X_i(k, t)$ of the data stream stored temporarily at the first step;
a third step of storing the complex Fourier coefficients $X_r(k, t)$ and $X_i(k, t)$ obtained at the second step into the second memory means (4) temporarily; and
a fourth step of by using the data value $x_r(t+N) + jx_i(t+N)$ supplied at time t+N, the data value $x_r(t) + jx_i(t)$ stored temporarily in the first memory means (1) and complex Fourier coefficients $X_r(k, t)$ and $X_i(k, t)$ stored temporarily in the secondmemorymeans (4) and used recursively, obtaining complex Fourier coefficient $X_r(k, t+1)$ and $X_i(k, t+1)$ in the specified frequency interval given by the minimum frequency f1 and the maximum frequency f2 to the data stream supplied since time t+1 with respect to a positive constant A for giving an amplitude value corresponding to a difference between the x(t+N) and the x(t) according to a following equation:

$$X_r(k,t+1) = \left\{ X_r(k,t) + \frac{1}{A}[x_r(t+N) - x_r(t)] \right\} \times \cos\left\{ 2\frac{\pi}{fs}\left[\frac{(f2-f1)k}{N-1} + f1\right] \right\}$$

$$- \left\{ X_i(k,t) + \frac{1}{A}[x_i(t+N) - x_i(t)] \right\} \times \sin\left\{ 2\frac{\pi}{fs}\left[\frac{(f2-f1)k}{N-1} + f1\right] \right\}$$

$$X_i(k,t+1) = \left\{ X_i(k,t) + \frac{1}{A}\left[ x_i(t+N) - x_i(t) \right] \right\} \times \cos\left\{ 2\frac{\pi}{fs}\left[ \frac{(f2-f1)k}{N-1} + f1 \right] \right\}$$

$$+ \left\{ X_r(k,t) + \frac{1}{A}\left[ x_r(t+N) - x_r(t) \right] \right\} \times \sin\left\{ 2\frac{\pi}{fs}\left[ \frac{(f2-f1)k}{N-1} + f1 \right] \right\}$$

**17.** A recursive discrete Fourier transformation method according to claim 16 wherein by using data value $y_r(t) + jy_i(t)$ supplied at time t, data value $y_r(t+N) + jy_i(t+N)$ supplied at time t+N and complex inverse discrete Fourier coefficients $Y_r(k, t)$ and $Y_i(k, t)$ with the real part and the imaginary part obtained with respect to N data values $y_r(t) + jy_i(t)$, $y_r(t+1) + jy_i(t+1)$, ..., $y_r(t+N-1) + jy_i(t+N-1)$ supplied from time t to time t+N-1,

a real part $Y_r(k, t+1)$ and an imaginary part $Y_i(k, t+1)$ of each complex inverse discrete Fourier coefficient of N data values supplied since time t+1 are obtained with respect to a positive constant value B for giving an amplitude corresponding to a difference between the $y_r(t+N)$ and the $y_r(t)$ as inverse discrete Fourier transformation data, according to following equations,

$$Y_r(k,t+1) = \left\{ Y_r(k,t) + \frac{1}{B}\left[ y_r(t+N) - y_r(t) \right] \right\} \cos\left[ 2\frac{\pi k}{N} \right]$$

$$+ \left\{ Y_i(k,t) + \frac{1}{B}\left[ y_i(t+N) - y_i(t) \right] \right\} \sin\left[ 2\frac{\pi k}{N} \right]$$

$$Y_i(k,t+1) = \left\{ Y_i(k,t) + \frac{1}{B}\left[ y_i(t+N) - y_i(t) \right] \right\} \cos\left[ 2\frac{\pi k}{N} \right]$$

$$- \left\{ Y_r(k,t) + \frac{1}{B}\left[ y_r(t+N) - y_r(t) \right] \right\} \sin\left[ 2\frac{\pi k}{N} \right]$$

and after the obtained inverse discrete Fourier transformation data is supplied, discrete Fourier transformation on the supplied inverse discrete Fourier transformation data is carried out,
the recursive discrete Fourier transformation conducting discrete Fourier transformation by using the positive constant value A corresponding to the positive constant value B.

**18.** A recursive discrete Fourier transformation method according to claim 16 wherein **k** indicating the degree of the complex Fourier coefficient is set to a desired value and the Fourier transformation to the set value **k** is repeated at every time having an equal interval.

**19.** A recursive inverse discrete Fourier transformation method for obtaining complex inverse Fourier coefficients wherein complex data values $x_r(t) + jx_i(t)$, $x_r(t+1) + jx_i(t+1)$, $x_r(t+2) + jx_i(t+2)$, $x_r(t+3) + jx_i(t+3)$, ..., $x_r(t+N-1) + jx_i(t+N-1)$, $x_r(t+N) + jx_i(t+N)$ sampled at times t, t+1, t+2, t+3, ..., t+N-1, t+N (N is a positive integer which is 1 or more) each having an equal interval are supplied and with such N data values supplied since time t as a data stream, an inverse complex Fourier transformation component, which is degree k (kis 0 or a positive integer smaller than N) obtained by carrying out inverse complex Fourier transformation on the data stream, is obtained such that a

real part $X_r$(k, t) thereof and an imaginary part $X_i$(k, t) thereof are inverse complex Fourier coefficients, the method comprising:

a first step of storing the data stream $x_r$(t)+$jx_i$(t), $x_r$(t+1) + $jx_i$(t+1), $x_r$(t+2) + $jx_i$(t+2), $x_r$(t+3) + $jx_i$(t+3), ..., $x_r$(t+N-1) + $jx_i$(t+N-1) supplied since time t at time t+N-1 into a first memory means (11) temporarily;

a second step of obtaining the inverse complex Fourier coefficients $X_r$(k, t) and $X_i$(k, t) of the data stream stored temporarily at the first step;

a third step of storing the inverse complex Fourier coefficients $X_r$(k, t) and $X_i$(k, t) obtained at the second step into the second memory means (14) temporarily; and

a fourth step of by using the data value $x_r$(t+N) + $jx_i$(t+N) supplied at time t+N, the data value $x_r$(t) + $jx_i$(t) stored in the first memory means (11) temporarily and the inverse complex Fourier coefficient $X_r$(k, t) and $X_i$(k, t) stored in the second memory means (14) temporarily, obtaining inverse complex Fourier coefficients $X_r$(k, t+1) and $X_i$(k, t+1) to the data stream supplied since time t+1 with respect to a positive constant B for giving an amplitude value corresponding to the difference between the $x_r$(t+N) and the $x_r$(t) according to a following equation:

$$X_r(k,t+1) = \left\{ X_r(k,t) + \frac{1}{B}\left[x_r(t+N) - x_r(t)\right] \right\} \cos\left[2\frac{\pi k}{N}\right]$$

$$+ \left\{ X_i(k,t) + \frac{1}{B}\left[x_i(t+N) - x_i(t)\right] \right\} \sin\left[2\frac{\pi k}{N}\right]$$

$$X_i(k,t+1) = \left\{ X_i(k,t) + \frac{1}{B}\left[x_i(t+N) - x_i(t)\right] \right\} \cos\left[2\frac{\pi k}{N}\right]$$

$$- \left\{ X_r(k,t) + \frac{1}{B}\left[x_r(t+N) - x_r(t)\right] \right\} \sin\left[2\frac{\pi k}{N}\right]$$

**20.** A recursive inverse discrete Fourier transformation method according to claim 19 wherein **k** indicating the degree of the complex Fourier coefficient is set to a desired value and the inverse Fourier transformation to the set value **k** is repeated at every time having an equal interval.

**21.** A recursive inverse discrete Fourier transformation method for obtaining complex inverse Fourier coefficients wherein with sampling frequency as fs, data values $x_r$(t) + $jx_i$(t), $x_r$(t+1) + $jx_i$(t+1), $x_r$(t+2) + $jx_i$(t+2), $x_r$(t+3) + $jx_i$(t+3), ..., $x_r$(t+N-1) + $jx_i$(t+N-1), $x_r$(t+N) + $jx_i$(t+N) sampled at times t, t+1, t+2, t+3, ..., t+N-1, t+N (N is a positive integer which is 1 or more) each having an equal interval are supplied and with such N data values supplied since time t as a data stream, a frequency interval given with a minimum frequency f1 and a maximum frequency f2 to the data stream is regarded as a specified frequency interval, a frequency interval obtained by dividing that specified frequency interval by the N is assumed to be a minimum frequency interval and a result of the inverse Fourier transformation provided by carrying out inverse complex Fourier transformation at every minimum frequency interval is obtained as a frequency component which is k (k is 0 or a positive integer smaller than N) times the minimum frequency interval, in the form of a real part $X_r$(k, t) and an imaginary part $X_i$(k, t), the method comprising:

a first step of storing the data stream $x_r$(t) + $jx_i$(t), $x_r$(t+1) + $jx_i$(t+1), $x_r$(t+2) + $jx_i$(t+2), $x_r$(t+3) + $jx_i$(t+3) ..., $x_r$(t+N-1) + $jx_i$(t+N-1), $x_r$(t+N) + $jx_i$(t+N) supplied since time t at time t+N-1 into a first memory means (11) temporarily;

a second step of obtaining the inverse Fourier coefficients $X_r$(k, t) and $X_i$(k, t) of the data stream stored temporarily at the first step;

a third step of storing the inverse Fourier coefficients $X_r$(k, t) and $X_i$(k, t) obtained at the second step into the second memory means (14) temporarily; and

a fourth step of by using the data value $x_r(t+N) + jx_i(t+N)$ supplied at time t+N, the data value $x_r(t) + jx_i(t)$ stored temporarily in the first memory means (11) and preceding inverse Fourier coefficients $X_r(k, t)$ and $X_i(k, t)$ stored temporarily in the second memory means (14), obtaining inverse Fourier coefficient $X_r(k, t+1)$ and $X_i(k, t+1)$ in the specified frequency interval given by the minimum frequency f1 and the maximum frequency f2 to the data stream supplied since time t+1 with respect to a positive constant B for giving an amplitude value corresponding to a difference between the x(t+N) and the x(t) according to following equations:

$$X_r(k,t+1) = \left\{ X_r(k,t) + \frac{1}{B}\left[ x_r(t+N) - x_r(t) \right] \right\} \times \cos\left\{ 2\frac{\pi}{fs}\left[ \frac{(f2-f1)k}{N-1} + f1 \right] \right\}$$

$$+ \left\{ X_i(k,t) + \frac{1}{B}\left[ x_i(t+N) - x_i(t) \right] \right\} \times \sin\left\{ 2\frac{\pi}{fs}\left[ \frac{(f2-f1)k}{N-1} + f1 \right] \right\}$$

$$X_i(k,t+1) = \left\{ X_i(k,t) + \frac{1}{B}\left[ x_i(t+N) - x_i(t) \right] \right\} \times \cos\left\{ 2\frac{\pi}{fs}\left[ \frac{(f2-f1)k}{N-1} + f1 \right] \right\}$$

$$- \left\{ X_r(k,t) + \frac{1}{B}\left[ x_r(t+N) - x_r(t) \right] \right\} \times \sin\left\{ 2\frac{\pi}{fs}\left[ \frac{(f2-f1)k}{N-1} + f1 \right] \right\}$$

**22.** A recursive inverse discrete Fourier transformation method according to claim 21 wherein **k** indicating the degree of the complex Fourier coefficient is set to a desired value and the inverse Fourier transformation to the set value **k** is repeated at every time having an equal interval.

# FIG.1

SAMPLING DATA x(t+N) → DATA UPDATING PORTION (1) → RECURSIVE DFT OPERATING PORTION (3)

BASIC FREQUENCY SETTING PORTION (2) → RECURSIVE DFT OPERATING PORTION (3)

MEMORY (4) ↔ RECURSIVE DFT OPERATING PORTION (3)

→ OUTPUT

$$Xr(k,t+1) + jXi(k,t+1)$$
$$0 \leq k \leq N-1$$

31

SAMPLING POINT NUMBER
N

FIG.2

SAMPLING
PERIOD
ts

DFT POINTS IN TIME t

| x(t) | x(t+1) | x(t+2) | · · · · · · · | x(t+N-3) | x(t+N-2) | x(t+N-1) |

DFT POINTS IN TIME t+1

| x(t+1) | x(t+2) | x(t+3) | · · · · · · · | x(t+N-2) | x(t+N-1) | x(t+N) |

TIME

EP 1 168 192 A2

# FIG.3

SAMPLING DATA
$x(t+N)$

→ 5

FOURIER OPERATING PORTION

$H(z)$

REAL PART → OUTPUT $Xr(k,t+1)$

IMAGINARY PART → $jXi(k,t+1)$

$0 \leqq k \leqq N-1$

$$H(z)=A(1-z^{-N})\left\{\frac{\cos\left[2\frac{\pi k}{N}\right]-j\sin\left[2\frac{\pi k}{N}\right]-z^{-1}}{1-2\cos\left[2\frac{\pi k}{N}\right]z^{-1}+z^{-2}}\right\}$$

EP 1 168 192 A2

# FIG.4

# FIG.5

BASIC FREQUENCY SETTING PORTION  $\quad$ 7

$$\frac{1}{fs}\left\{\frac{(f2-f1)k}{N-1}+f1\right\}$$

FOURIER OPERATING PORTION  $\quad$ 6

$H(z)$

SAMPLING DATA
$\overline{x(t+N)}$

OUTPUT

REAL PART  $\longrightarrow$  $Xr(k,t+1)$

IMAGINARY PART  $\longrightarrow$  $jXi(k,t+1)$

$0\leqq k\leqq N-1$

# FIG.6

SAMPLING DATA
$x(t+N)$
$= x_r(t+N)+jx_i(t+N)$

DATA UPDATING PORTION — 11

BASIC FREQUENCY SETTING PORTION — 12

RECURSIVE IDFT OPERATING PORTION — 13

MEMORY — 14

OUTPUT
$X_r(k,t+1)+jX_i(k,t+1)$
$0 \leqq k \leqq N-1$

EP 1 168 192 A2